# EUROPEAN PATENT APPLICATION

(11) **EP 2 733 937 A1**
(43) Date of publication of application: **21.05.2014**
(21) Application number: 12810768.7
(22) Date of filing: 27.06.2012
(51) Int. Cl.: H04N 7/18, B60R 25/10, G08B 13/00, G08B 21/00, G08B 25/00

(54) **VEHICLE MONITORING DEVICE, VEHICLE MONITORING SYSTEM, TERMINAL DEVICE, AND VEHICLE MONITORING METHOD**

(30) Priority: 12.07.2011 JP 2011153725; 12.07.2011 JP 2011153735
(71) Applicant: Nissan Motor Co., Ltd, Yokohama-shi, Kanagawa 221-0023 (JP)
(72) Inventor: TAKANO, Teruhisa, Atsugi-shi, Kanagawa 243-0123 (JP)
(74) Representative: Hoefer & Partner
(86) International application number: PCT/JP2012/066367
(87) International publication number: WO 2013/008623

(57) **Abstract**

Provided is a vehicle monitoring system (1000) provided with: a control device (10) for performing a monitoring-image-forming function for forming a single monitoring image in which captured images taken by cameras (1) installed in a clockwise or counterclockwise direction around the circumference of the body of a vehicle V are disposed according to the order in which the cameras (1) are installed, a mapping-information-assigning function for appending, to the monitoring image, mapping information for projecting a monitoring image K onto projection surfaces S established by the side of a columnar-shaped projection model M having the surface upon which the vehicle V rests as a bottom surface, and a transmission function for transmitting information containing the monitoring image K with appended mapping information to an external terminal device (800); a communication device (400); and an external terminal device (800).

## Description

### [Technological Field]

The present invention relates to a vehicle monitoring device, a vehicle monitoring system, a terminal device, and a vehicle monitoring method for monitoring the surroundings of a vehicle using a camera installed in the vehicle.

The present application claims priority based on Japanese Patent Application No. 2011 - 153725, filed July 12, 2011, and Japanese Patent Application No. 2011-153735, filed July 12, 2011, the content whereof being incorporated herein as part of the present application with respect to designated states recognizing incorporation by reference.

### [Background Technology]

In relation to such devices there are known antitheft devices in which, when an external stimulus is detected by a door contact sensor or the like, a camera is made to capture the surroundings, and the image information is forwarded to an external portable phone or the like (patent document 1).

### Prior Art Literature

### Patent Literature

Patent Document 1: Japanese Laid-Open Patent Application Publication No. 2006-107279

### [Disclosure of the Invention]

### [Problems to Be Solved by the Invention]

However, if captured images from a plurality of cameras installed in the vehicle are sent as videos, the receiving device may not be able to play the plurality of videos simultaneously depending on its capabilities, which can lead to the problem that part of the acquired captured images are not effectively utilized.

The problem to be solved by the present invention is to form a monitoring image that, while being formed based on a plurality of captured images, can be simultaneously played as a video on a terminal device regardless of the capabilities of the receiving terminal device.

### [Means Used to Solve the Above-Mentioned Problems]

The present invention solves the abovementioned problem by transmitting, to an external terminal device, a single monitoring image in which captured images taken by a plurality of cameras are disposed according to the order in which the cameras are installed and mapping information for projecting the monitoring image upon a projection surface established by a side surface of a columnar-shaped projection model.

### [Effect of the Invention]

According to the present invention, the external terminal device receiving the sent monitoring image is capable of projecting a single monitoring image, in which the plurality of captured images are disposed in an order in which the cameras are installed, in a series on the projection surface provided on the sides of a prism based on the mapping information. This allows a monitoring image formed from a plurality of captured images taken from different directions to be played as a video regardless of the capabilities of the terminal device. As a result, the information from the captured images obtained by the plurality of cameras is not wasted, and can be effectively used as monitoring images by a user.

### [Brief Description of the Drawings]

Figure 1 is a diagrammatic view of a vehicle monitoring system comprising a monitoring device according to a first embodiment of the present invention;
Figure 2 is an illustration of an example of a camera installation configuration;
Figure 3 is an illustration of another example of a configuration for disposing cameras;
Figure 4 is an illustration of an example of a captured image taken by a front camera;
Figure 5 is an illustration of an example of a captured image taken by a right side camera;
Figure 6 is an illustration of an example of a captured image taken by a rear camera;
Figure 7 is an illustration of an example of a captured image taken by a left side camera;
Figure 8 is an illustration of an example of a monitoring image formed based on a plurality of captured images;
Figure 9 is an explanatory illustration for a process of correcting distortion in a monitoring image;
Figure 10 is a schematic illustration of one example of a projection model according to the present embodiment;
Figure 11 is a schematic cross-sectional view of the projection model shown in Figure 10 along a plane xy;
Figure 12 is a first illustration of an example of a display image shown on a display of a terminal device;
Figure 13 is a second illustration of an example of a display image shown on a display of a terminal device;
Figure 14 is a third illustration of an example of a display image shown on a display of a terminal device;
Figure 15 is a fourth illustration of an example of a display image shown on a display of a terminal device;
Figure 16 is a fifth illustration of an example of a display image shown on a display of a terminal device;
Figure 17 is a sixth illustration of an example of a display image shown on a display of a terminal device;
Figure 18 is a seventh illustration of an example of a display image shown on a display of a terminal device;
Figure 19 is an eighth illustration of an example of a display image shown on a display of a terminal device;
Figure 20 is a flow chart showing a control process for a vehicle monitoring device;
Figure 21 is a diagram of a vehicle monitoring system comprising a monitoring device according to a second embodiment of the present invention;
Figure 22 is an illustration of an example of a camera and sensor installation configuration;
Figure 23 corresponds to Figure 8, and is an illustration of an example of another monitoring image formed based on the captured images from the cameras;
Figure 24 is an illustration of an example of a display image showing a head-on view of an object being monitored;
Figure 25 is an explanatory illustration for a process of rotating the display image shown in Figure 21; and
Figure 26 is a flow chart showing a control process for a vehicle monitoring device according to a second embodiment of the present invention.

### [Preferred Embodiments of the Invention]

### <First Embodiment>

A first embodiment of the present invention will be described hereafter with reference to the drawings. In the present embodiment, an example will be described in which the vehicle monitoring device according to the present invention is applied to a monitoring device 100 for monitoring a vehicle and a vehicle monitoring system 1000 provided with the monitoring device. The object monitored by the vehicle monitoring device according to the present invention is not limited to a vehicle, but may also be a motorcycle, a ship, a piece of heavy machinery, a forklift, or other moving objects.

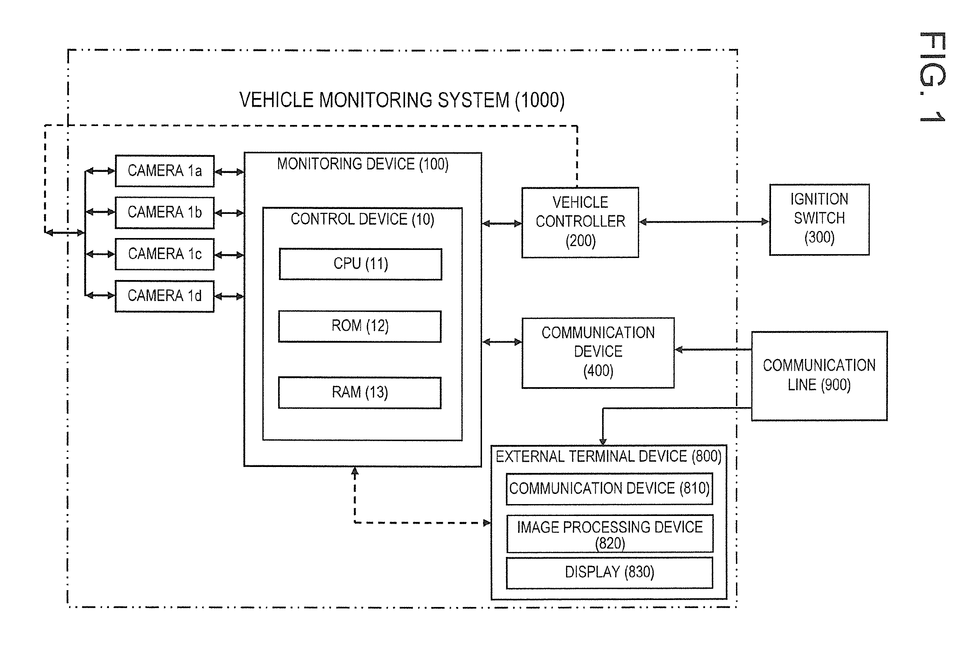

Figure 1 is a block diagram of the vehicle monitoring system 1000 comprising the monitoring device 100 according to the present embodiment. As shown in Figure 1, the vehicle monitoring system 1000 according to the present embodiment is provided with four cameras 1a-1d (also collectively referred to as the "cameras 1" hereafter) installed in the vehicle.

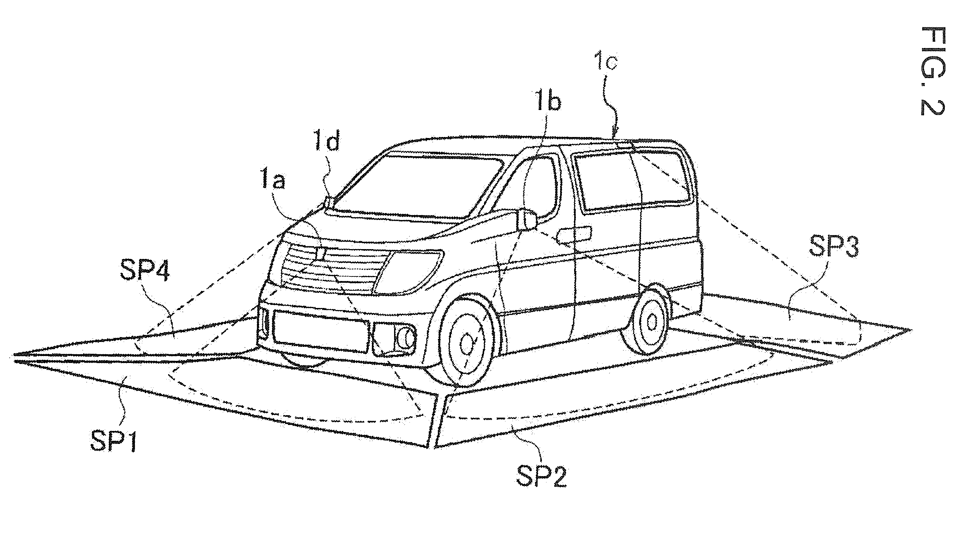

Figure 2 is an illustration of an example of a configuration used when the cameras 1a-1d are attached to a vehicle V. The cameras 1a-1d are constituted by charge-coupled devices (CCDs) or other imaging elements, each being installed at a different external position on the vehicle V, and that capture images of surroundings of the vehicle in four directions. As shown, for example, in Figure 2, the camera 1a is installed at a predetermined position on the front of the vehicle V, such as on the front grille, to capture an image of the road or an object present within an area SP1 to the front of the vehicle V and the space in front thereof (i.e., a front view image). The camera 1d is installed at a predetermined position on the left side of the vehicle V, such as by a left-side mirror, to capture an image of the road or an object present within an area SP2 to the left of the vehicle V and in the surrounding space (i.e., a left-side view image). The camera 1c is installed at a predetermined position on the rear side of the vehicle V, such as on a rear finisher or roof spoiler, to capture an image of the road or an object present within an area SP3 to the rear of the vehicle V and in the in the rear space thereof (i.e., a rear view image). The camera I b is installed at a predetermined position on the right side of the vehicle V, such as by a right-side mirror, to capture an image of the road or an object present within an area SP4 to the left of the vehicle V and in the surrounding space (i.e., a right-side view image). A control device 10 acquires captured images taken by each of the cameras 1a-1d.

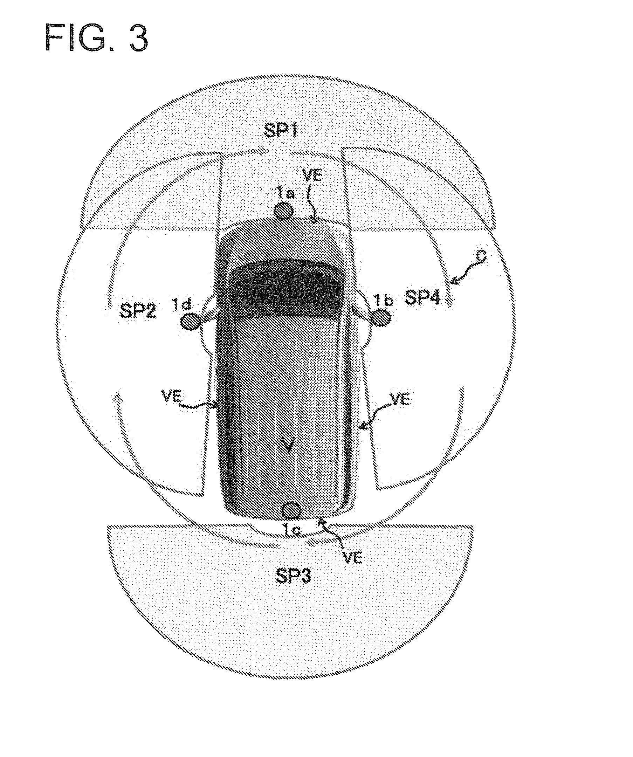

Figure 3 is an illustration of the disposition of the cameras 1a-1d as view from above the vehicle V. As shown in Figure 3, the camera 1a that captures the area SP1, the camera 1b that captures the area SP4, the camera 1c that captures the area SP3, and the camera 1d that captures the area SP2 are installed going right (i.e., clockwise) or going left (i.e., counterclockwise) around the circumference VE of the body of the vehicle V. In other words, going right (i.e., clockwise) around the circumference VE of the body of the vehicle V in the direction indicated by arrow C in Figure 3, the camera 1b is installed to the right of the camera 1a, the camera 1c is installed to the right of the camera 1b, the camera 1d is installed to the right of the camera 1c, and the camera 1a is installed to the right of the camera I d. Going around the circumference VE of the body of the vehicle V in the direction opposite that indicated by arrow C in Figure 3 (i.e., counterclockwise), the camera I d is installed to the left of the camera 1a, the camera 1c is installed to the left of the camera 1d, the camera 1b is installed to the left of the camera 1c, and the camera 1a is installed to the left of the camera I b.

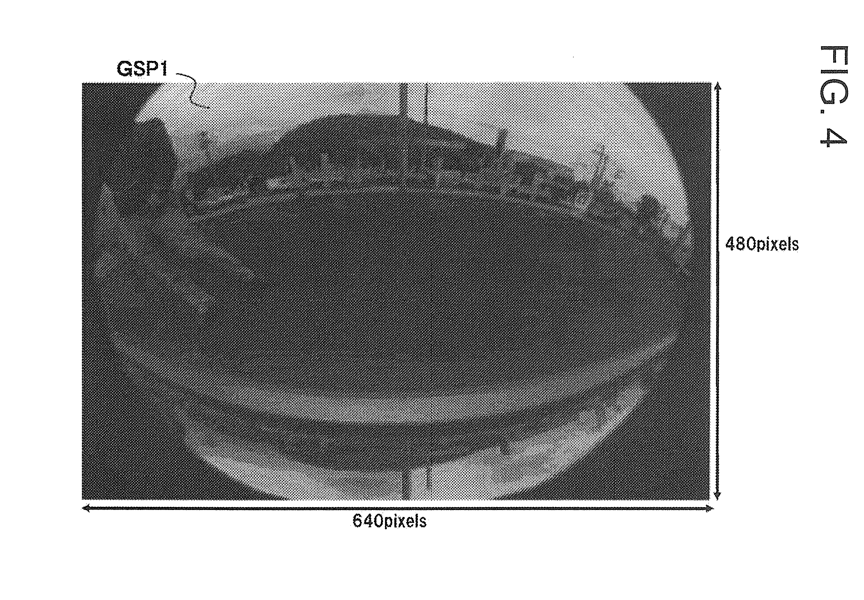

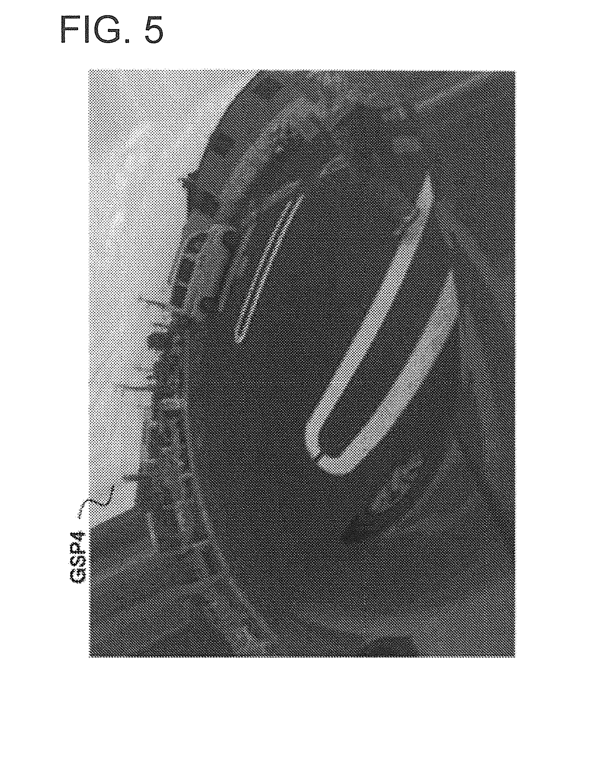

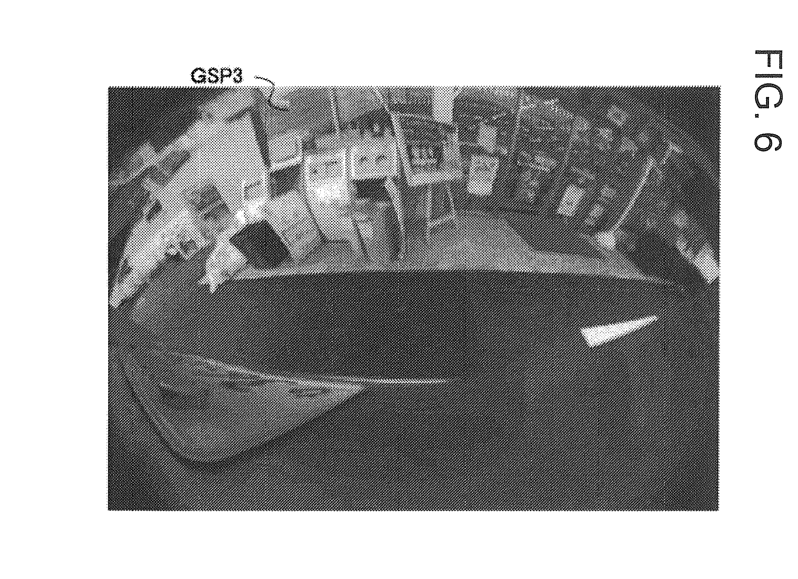

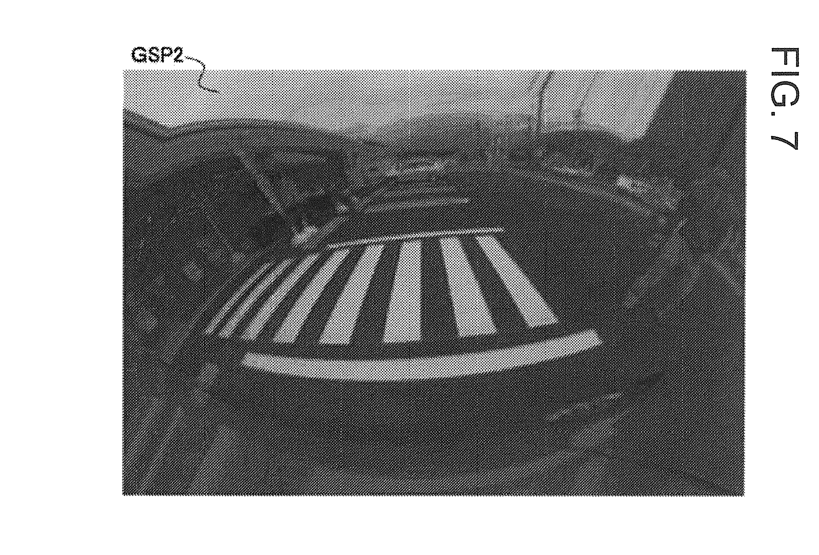

Figure 4 shows an example of a captured image GSP1 of the area SP1 taken by the front camera 1a, Figure 5 shows an example of a captured image GSP4 of the area SP4 taken by the right-side camera 1b, Figure 6 shown an example of a captured image GSP3 of the area SP3 taken by the rear camera 1c, and Figure 7 shows an example of a captured image GSP2 of the area SP2 taken by the left-side camera 1d. Each of the captured images has a size of 480 pixels (vertical) × 640 pixels (horizontal). There is no particular limitation upon the size of the captured images; any size allowing for video play by a typical terminal device is possible.

The number and positions of the cameras 1 can be determined, as appropriate, according to the size, shape, detection area setting method, and the like of the vehicle V. Each of the cameras 1 is assigned an identifier according to its address (position), and the control device 10 is capable of identifying each of the cameras 1 based on the identifiers. The control device 10 is also capable of transmitting activation commands and other commands to a specific one of the camera s1 by assigning an identifier.

The vehicle monitoring system 1000 according to the present embodiment also comprises the monitoring device 100, a vehicle controller 200, a communication device 400 and an external terminal device 800. The vehicle monitoring system 1000 can be provided with an ignition switch 300 capable of exchanging information with the vehicle controller 200. The devices are connected by a controller area network (CAN) or other type of onboard LAN, and can exchange information with each other.

In the vehicle monitoring system 1000 according to the present embodiment, the monitoring device 100 is capable of communicating via the communication device 400 with the external terminal device 800 (computer), which is provided with a communication device 810, such as a portable phone or smart phone. The external terminal device 800 of the present embodiment is provided with the communication device 810, an image processing device 820, and a display 830, the communication device 810 acquiring monitoring images from the onboard monitoring device 100, the image processing device 820 executing image processes necessary to display images, and the display 830 displaying monitoring images. A user in possession of the external terminal device 800 can use the external terminal device 800 to confirm vehicle monitoring images sent from the monitoring device 100.

As shown in Figure 1, the control device 10 of the monitoring device 100 according to the present embodiment is provided with read-only memory (ROM) 12 for storing a program for forming a monitoring image based on the plurality of monitoring images, associating the monitoring image with mapping information for projecting the monitoring image upon a projection surface established by a side surface of a columnar-shaped projection model, and transmitting the monitoring image and mapping information to the external terminal device 800, a central processing unit (CPU) 11 functioning as an operation circuit allowing for functioning as a monitoring device 100 by executing the program stored in the ROM 12, and random-access memory (RAM) 13 functioning as an accessible storage device.

The control device 10 of the monitoring device 100 according to the present embodiment is capable of executing various functions through the cooperation of the hardware described above and software for performing a monitoring image-forming function, a mapping information-assigning function and a transmission function. In the present embodiment, an aspect in which the control device 10 transmits various control commands will be described; it is also possible for the control device 10 of the present embodiment to control the cameras 1 and the communication device 400 via the vehicle controller 200.

The monitoring image-forming function, mapping information-assigning function, and transmission function performed by the monitoring device 100 according to the present embodiment of the present invention will be described hereafter.

First, the monitoring image-forming function will be described. The control device 10 of the monitoring device 100 according to the present embodiment acquires captured images from each of the cameras 1, and forms a single monitoring image in which the captured images from the cameras 1 installed in the left or right direction around the circumference of the body of the vehicle V are disposed according to the order in which the cameras 1 are installed.

In the present embodiment, as described above, the cameras 1 are installed in the order camera 1a, 1b, 1c, 1d going right (i.e., clockwise) around the circumference VE of the body of the vehicle V; thus, the control device 10 horizontally connects the plurality of captured images taken by the cameras 1 in the order (camera 1a, 1b, 1c, 1d) in which the cameras 1 are installed to form a single whole, forming a single monitoring image. In the monitoring image according to the present embodiment, the captured images are disposed so that the surface upon which the vehicle V rests (i.e., the road surface) is at the lower edge of the image, and the captured images are connected at the sides corresponding to the height direction (perpendicular direction) with respect to the road surface.

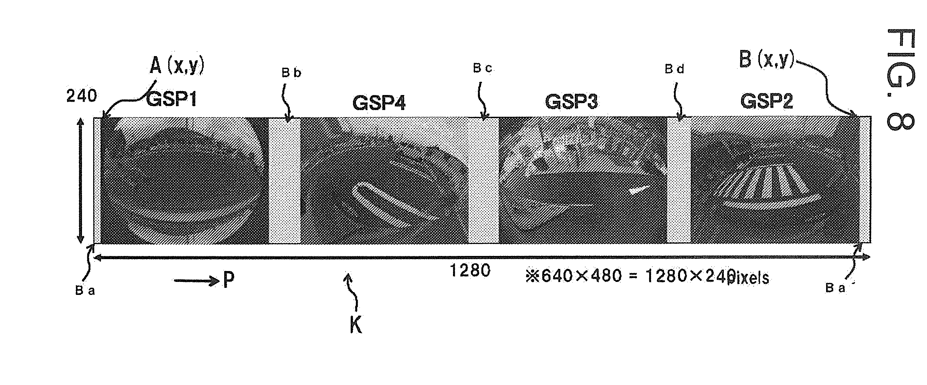

Figure 8 shows an example of a monitoring image K. In the monitoring image K according to the present embodiment, as shown in Figure 8, the captured image GSP1 of the area SP1 taken by the front camera 1a, the captured image GSP4 of the area SP4 taken by the right-side camera 1b, the captured image GSP3 of the area SP3 taken by the rear camera 1c, and the captured image GSP2 of the area SP2 taken by the left-side camera 1d are horizontally disposed in a direction P traveling from the left side to the right side of the Figure in the left-to-right order GSP1, GSP4, GSP3, GSP2 so that the four captured images form a series. In other words, the monitoring image K contains the captured image GSP1, the captured image GSP4, the captured image GSP3 and the captured image GSP2, which are aligned in a horizontal row.

The monitoring image K so formed is displayed in order from left to right so that the part of the image corresponding to the road surface (the surface upon which the vehicle rests) is at the bottom, allowing a picture showing a panoramic view of the surroundings of the vehicle V as seen in the clockwise direction to be presented to the user.

When forming a single monitoring image K, the control device 10 of the monitoring device 100 according to the present embodiment can use captured images taken substantially simultaneously by the cameras 1. The information contained in the monitoring image K can thus be synchronized, thereby allowing the state of the vehicle surroundings to be accurately represented at a predetermined timing. If the captured image GSP1 of the front of the vehicle and the captured image GSP4 of the right of the vehicle contained within the same monitoring image K are taken at different timings, images having different image timings are formed when the monitoring image K is formed, creating an unnatural effect for a user viewing the image; however, in the monitoring device 100 of the present embodiment, the monitoring image K is formed using captured images taken substantially simultaneously, avoiding such unnaturalness.

The control device 10 according to the present embodiment stores the monitoring images K formed from the captured images taken by the cameras having substantially identical image timings over time, allowing a monitoring image K constituted by a video containing a plurality of the monitoring images K for a predetermined period of time to be formed. Forming the monitoring image K as a video based on substantially simultaneously taken captured images allows changes in the state of the vehicle surroundings to be accurately represented.

However, when captured images for each of the captured areas are stored over time, and the monitoring image K constituted by a video formed for each of the captured areas is sent to a terminal device, it may not be possible to simultaneously play the plurality of videos depending upon the capabilities of the terminal device. Because conventional terminal devices cannot simultaneously play and display a plurality of videos, the devices must switch screens and play the videos one at a time when playing the videos. In other words, it is impossible to simultaneously view pictures (videos) for a plurality of directions using conventional terminal devices, leading to the drawback that the entire vehicle surroundings cannot be monitored on a single screen.

By contrast, in the control device 10 according to the present embodiment, a single monitoring image K is formed from a plurality of captured images, allowing captured images for different imaging directions to be simultaneously played as videos regardless of the capabilities of the terminal device 800. In other words, the monitoring image K is continuously played (video play), thereby allowing the four captured images contained within the captured image to be simultaneously and continuously played (video play), and changes in the state of areas in different directions to be monitored on a single screen.

In the control device 10 of the monitoring device 100 according to the present embodiment, it is also possible to compress image data to form the monitoring image K so that the pixel count of the monitoring image K is substantially identical to the pixel count for the captured images taken by each of the cameras 1. The size of the each captured images shown in Figures 4-7 is 480 × 640 pixels. In the present embodiment, as shown in Figure 8, the control device 10 according to the present embodiment performs a compression process so that the size of the monitoring image K is 1280 × 240 pixels. The size of the monitoring image K (1280 × 240 pixels) is thus made equal to that of the captured images (480 × 640 pixels), allowing image processing and play to be executed regardless of the capabilities of the terminal device 800 receiving the monitoring image K.

In the control device 10 of the monitoring device 100 according to the present embodiment, linear graphics indicating the boundaries of each of the disposed captured images can be further appended to the monitoring image K. Taking the monitoring image K shown in Figure 8 as an example, the control device 10 is capable of appending rectangular divider images Bb, Bc, Bd, Ba to the monitoring image K between each of the captured images as linear graphics indicating the boundaries of each of the disposed captured images.

Disposing divider images at the boundaries of the captured image in this way allows each of the monitoring image K constituting an integrated monitoring image K but having different imaging directions to be independently recognized. In other words, the divider images serve as frames for the captured images. In addition, because of the high level of image distortion near the boundaries of the captured images, divider images can be disposed at the boundaries of the captured images to conceal images of highly distorted areas, or to suggest that there is a high level of distortion.

The control device 10 of the monitoring device 100 according to the present embodiment is capable of forming the monitoring image K after correcting distortion arising when the captured images are projected onto a projection surface established by the side of a projection model to be described hereafter. The areas around the edges of the captured image have a tendency to exhibit image distortion, and the tendency toward distortion in the captured images is especially increased when the cameras 1 are wide-angle cameras. Thus, in the present embodiment, distortion in the captured images is corrected using a pre-defined image conversion algorithm and correction level in order to correct image distortion.

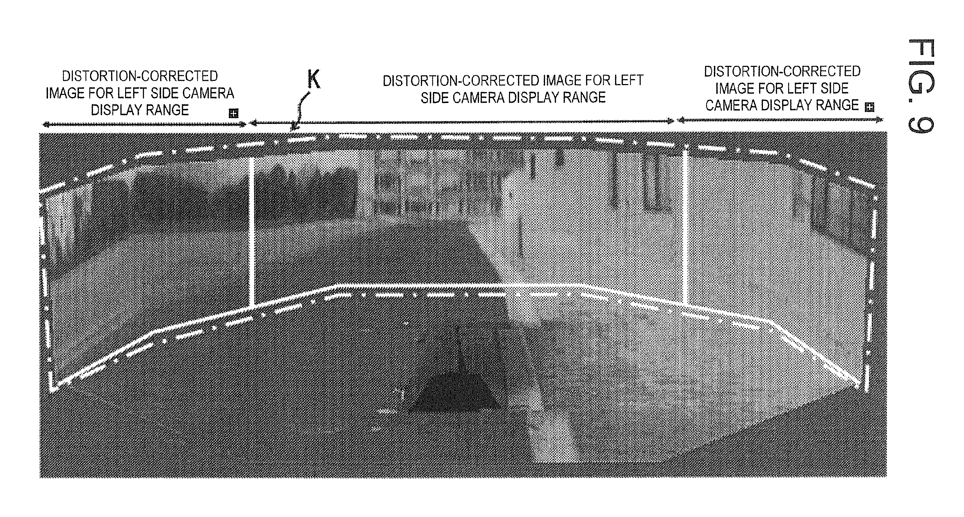

Although it is not particularly limited thereto, the control device 10 is capable, as shown in Figure 9, of loading information for a projection model identical to the projection model upon which the monitoring image K is projected in the terminal device 800 from the ROM 12, projecting the captured images onto a projection surface of the projection model, and pre-correcting distortion arising on the projection surface. The image conversion algorithm and correction level can be defined, as appropriate, according to the features of the cameras 1 and the shape of the projection model, and any known method at the time of filing can be used to this end.

Pre-correcting distortion arising when the image K is projected onto the projection surface of the projection model in this way allows an easy-to-view monitoring image K exhibiting little distortion to be provided. Pre-correcting distortion also allows positional deviation of the horizontally-disposed captured images to be reduced.

Next, the mapping information-assigning function of the monitoring device 100 according to the present embodiment will be described. In the monitoring device 100 according to the present embodiment, the control device 10 is capable of associating mapping information for projecting the formed monitoring image K onto a projection surface established by a side of a columnar-shaped projection model M, the bottom surface of which is constituted by the surface upon which the vehicle V rests, with the monitoring image K.

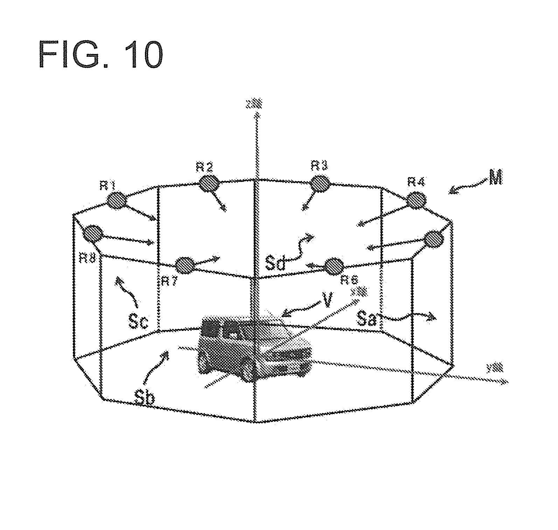

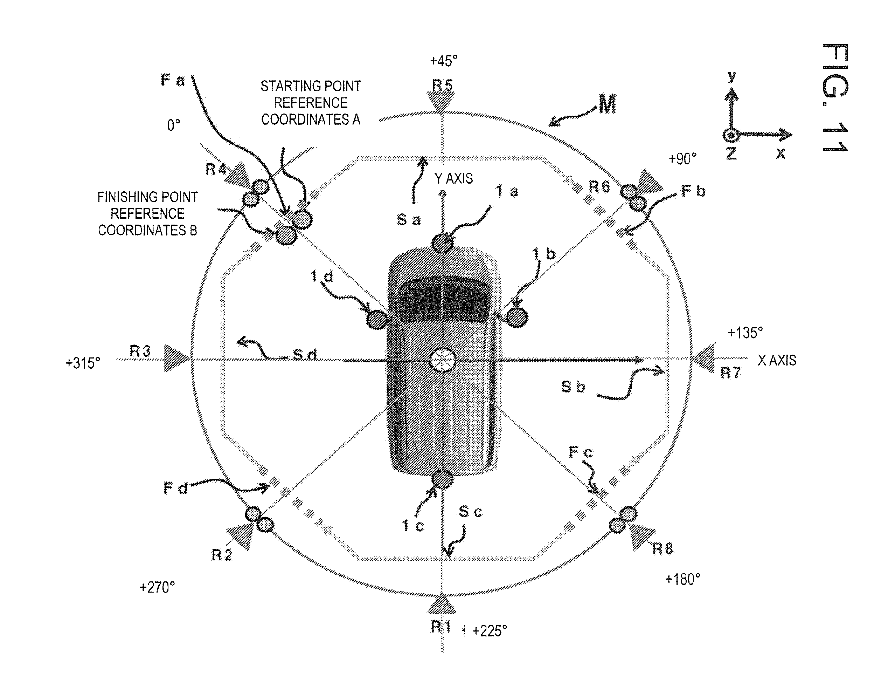

Figure 10 is an illustration of an example of the projection model M according to the present embodiment, and Figure 11 is a cross-sectional schematic view along a plane xy of the projection model M shown in Figure 10.

As shown in the drawings, the projection model M according to the present embodiment has an octagonal bottom surface, and is an octagonal prism having height in the vertical direction (in the drawings, the direction of the z axis). There is no particular limitation upon the shape of the projection model M as long as it is a prism having side surfaces adjacent to the boundary of the bottom surface: the model may be a cylinder, triangular prism, rectangular prism, hexagonal prism, or other circular or polygonal prism, or a pyramid having a polygonal bottom surface and triangular sides.

As shown in the drawings, the bottom surface of the projection model M according to the present embodiment is parallel with the surface upon which the vehicle V rests. Projection surfaces Sa, Sb, Sc, Sd (hereafter also collectively referred to as the "projection surfaces S") upon which images of the surroundings of the vehicle V resting on the bottom surface of the projection model M are established by the inside surfaces of the sides of the projection model M. The projection surfaces S can also be constituted by a part of projection surface Sa and a part of projection surface Sb, a part of projection surface Sb and a part of projection surface Sc, a part of projection surface Sc and a part of projection surface Sd, and a part of projection surface Sd and a part of projection surface Sa. The monitoring image K is projected on the projection surfaces S as an image of the vehicle V as viewed looking down from viewpoints R (R1-R8; hereafter also collectively referred to as the "viewpoints R") at the upper part of the projection model M surrounding the vehicle V.

The control device 10 of the monitoring device 100 according to the present embodiment is capable of associating reference coordinates for a captured image disposed at a right or left edge with the monitoring image K as mapping information. Taking the monitoring image K shown in Figure 8 as an example, the control device 10 is capable of appending coordinates A (x, y) for the upper left vertex of captured image GSP disposed on the left end to the monitoring image K as mapping information (reference coordinates) indicating a starting end position or finishing end position for the monitoring image K when projected on the projection model M. Similarly, the control device 10 is capable of appending coordinates B (x, y) for the upper right vertex of captured image GSP2 disposed on the right end to the monitoring image K as mapping information reference coordinates indicating a starting end position or finishing end position for the monitoring image K when projected on the projection model M. There is no particular limitation upon the starting end position or finishing end position indicating reference coordinates for the captured image; they may be for the lower left vertex of the monitoring image K disposed at the left end, or for the lower right vertex of the monitoring image K disposed at the right end. The mapping information may be appended to every pixel of the image data for the monitoring image K, or may be managed as a separate file from the monitoring image K.

By associating information indicating the starting end position or finishing end position of the monitoring image K, i.e., reference coordinates serving as a reference during the projection process, with the monitoring image K as mapping information, the terminal device 800 receiving the monitoring image K allows a user to recognize a reference position initially or during projection processing, allowing the monitoring image K aligned according to the order in which the cameras 1 are installed to be projected in order on the projection surfaces S on the side of the projection model M. The captured image GSP1 of the front of the vehicle can be projected on the projection surface Sa positioned in the direction captured by the camera 1a, the captured image GSP4 of the right of the vehicle on the projection surface Sb positioned in the direction captured by the camera 1b, the captured image GSP3 of the rear of the vehicle on the projection surface Sc positioned in the direction captured by the camera 1c, and the captured image GSP2 of the left of the vehicle on the projection surface Sd positioned in the direction captured by the camera 1d.

The monitoring image K projected on the projection model M is thus capable of presenting an image as if the surroundings of the vehicle V were being viewed panoramically. In other words, the monitoring image K, which contains the captured images disposed in a single horizontal row according to the order in which the cameras 1 are installed, is projected on similarly aligned sides of the prism of the projection model M, allowing the positional relationships in the picture of the surroundings of the vehicle V to be reproduced in the monitoring image K projected on the projection surfaces S of the columnar-shaped projection model M.

The control device 10 according to the present embodiment can store the association between the coordinate values of the monitoring image K and the coordinate values of the projection surfaces S of the projection model M as mapping information, appending the information to the monitoring image K, or can pre-store the information in the terminal device 800.

The positions of the viewpoints R and projection surfaces S shown in the drawing are merely examples, and can be set as desired. In particular, the viewpoints R can be altered by a user. The relationship between the viewpoints R and the projection position of the monitoring image K is predefined, and a monitoring image K as view from newly set viewpoints R can be projected on the projection surfaces S (Sa-Sd) by performing a predetermined coordinate conversion when the positions of the viewpoints R are altered. A method known at the time of filing can be used for this viewpoint conversion process.

The control device 10 according to the present embodiment forms monitoring images K based on captured images taken at predetermined timings, and stores the monitoring images K over time according to the captured timing in association with information for mapping information, reference coordinates, and boundary-indicating linear graphics (divider images). Although not particularly limited to one way or the other, the control device 10 may store the monitoring images K as a single video containing a plurality of monitoring images K for a predetermined period of time, or may store the monitoring images K in a format allowing for streaming forwarding and play.

The communication function of the control device 10 according to the present embodiment will be described. The control device 10 is capable of transmitting information containing the formed monitoring image K to the external terminal device 800 via a communication line 900 capable of being used as a public communication network.

The terminal device 800 for receiving and displaying the monitoring image K will be described below.

The terminal device 800 is disposed externally to the monitoring device 100 described above, and is provided with a communication device 810 for communicating with the monitoring device 100, an image processing device 820 for converting acquired images to an image for display, and a display 830 for displaying converted monitoring images K for display.

The communication device 810 receives a monitoring image K and mapping information associated with the monitoring image K sent by the monitoring device 100. The monitoring image K shows captured images taken by a plurality of cameras 1 installed at different positions on the body of the vehicle V, the captured images being disposed in the clockwise or counterclockwise direction around the circumference of the body of the vehicle V according to the order in which the cameras 1 are installed (i.e., the order thereof in the clockwise or counterclockwise direction around the circumference of the body of the vehicle V). The monitoring image K has associated mapping information for projecting the monitoring image K onto the projection surfaces S of the columnar-shaped projection model M. The communication device 810 transmits the acquired monitoring image K and mapping information to the image processing device 820.

The image processing device 820 loads the pre-stored projection model M, and forms a display image in which the monitoring image K is projected onto the projection surfaces Sa-Sd established by the sides of the columnar-shaped projection model M having the surface upon which the vehicle V rests as a bottom surface shown in Figures 10 and 11 based on the mapping information. Specifically, the pixels of the received monitoring image K are projected (mapped) onto the pixels of the projection surfaces Sa-Sd based on the mapping information.

During projection of the monitoring image K onto the projection model M, the image processing device 820 recognizes a starting point of the monitoring image K (i.e., a left or right end of the monitoring image K) based on the reference coordinates received along with the monitoring image K, and performs a projection process so that the starting point concords with a predefined starting point (left or right end of the projection surfaces S) on the projection model M.

During projection of the monitoring image K onto the projection model M, the image processing device 820 disposes linear graphics (divider images) indicating the boundaries of the captured images on the projection model M. The divider images can be pre-appended to the projection model M, or can be appended to the monitoring image K following the projection process.

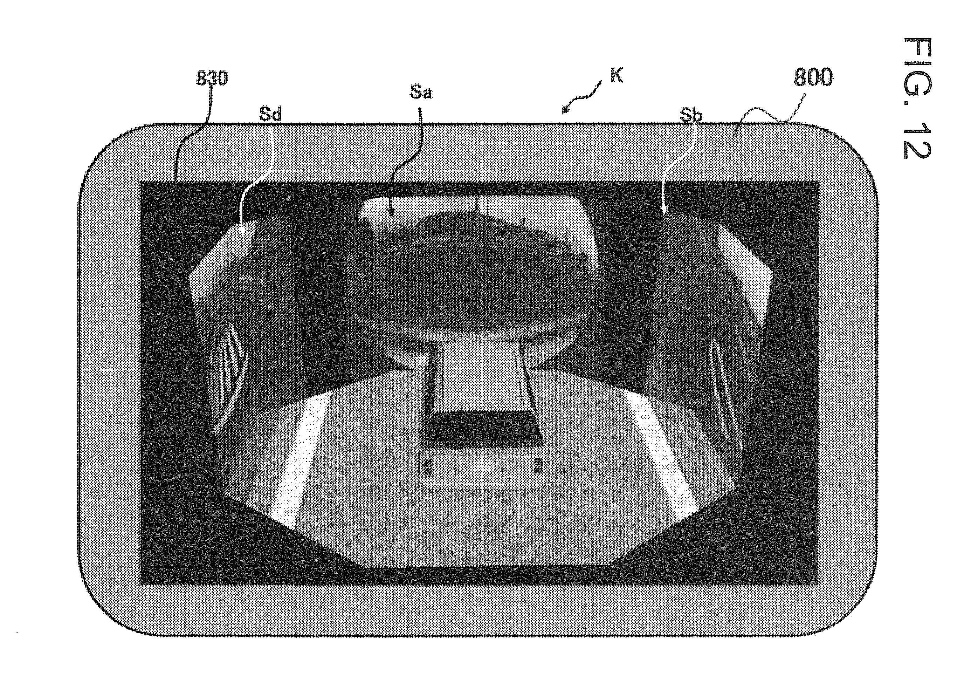

The display 830 displays the monitoring image K projected onto the projection surfaces S of the projection model M. Figures 12-19 show examples of display images for the monitoring image K.

Figure 12 shows a monitoring image K projected onto projection surfaces Sd, Sa, Sb from viewpoint R1 shown in Figures 10 and 11. An image of the vehicle V as seen from the viewpoints R∼ is applied to the bottom surface of the projection model M. The parts between the projection surfaces Sd, Sa, Sb where images are not displayed are "boundary-indicating linear graphics (divider images)".

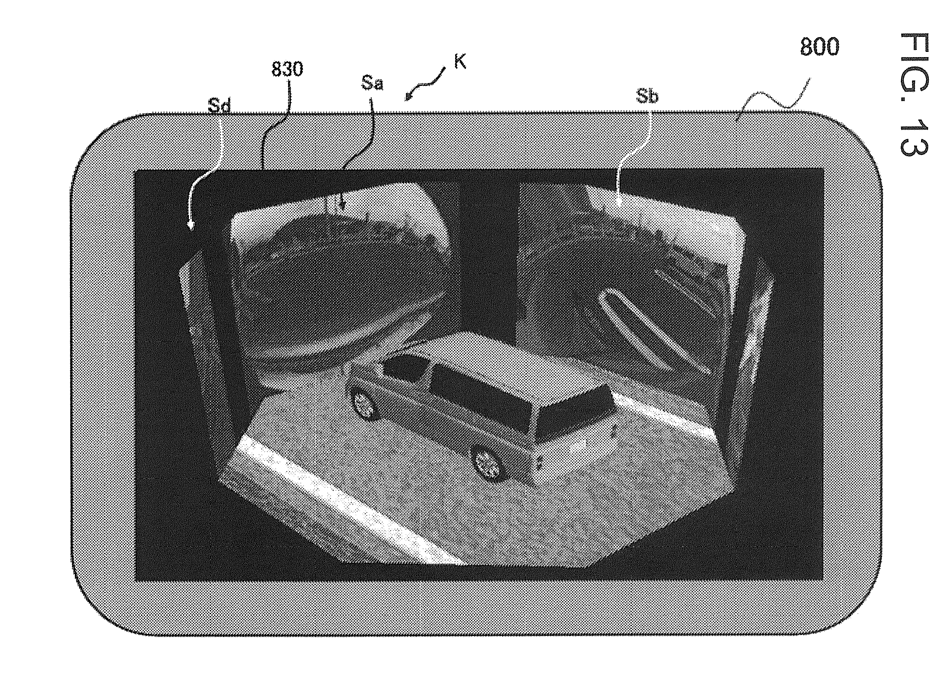

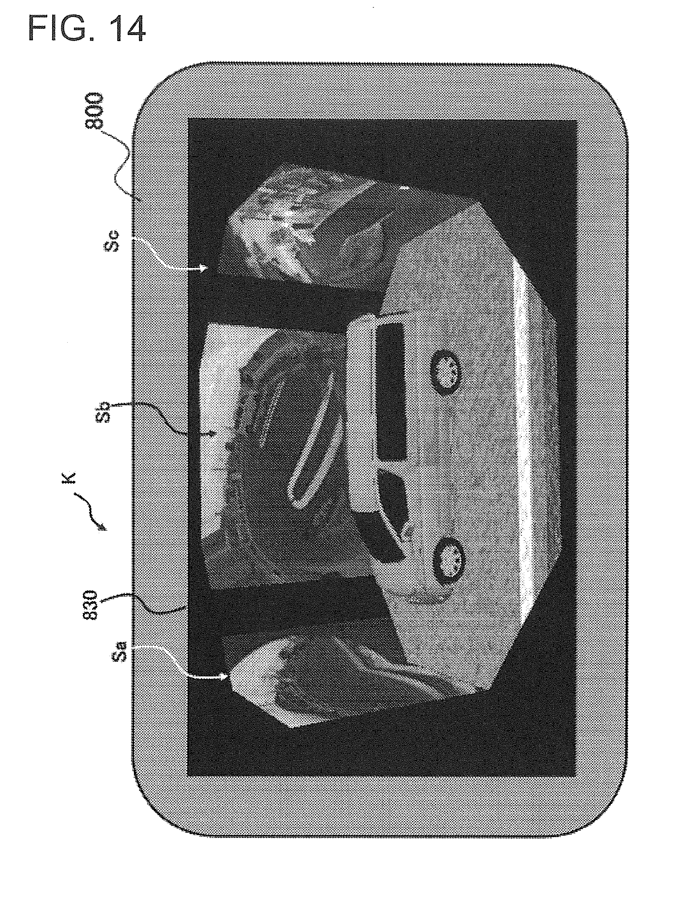

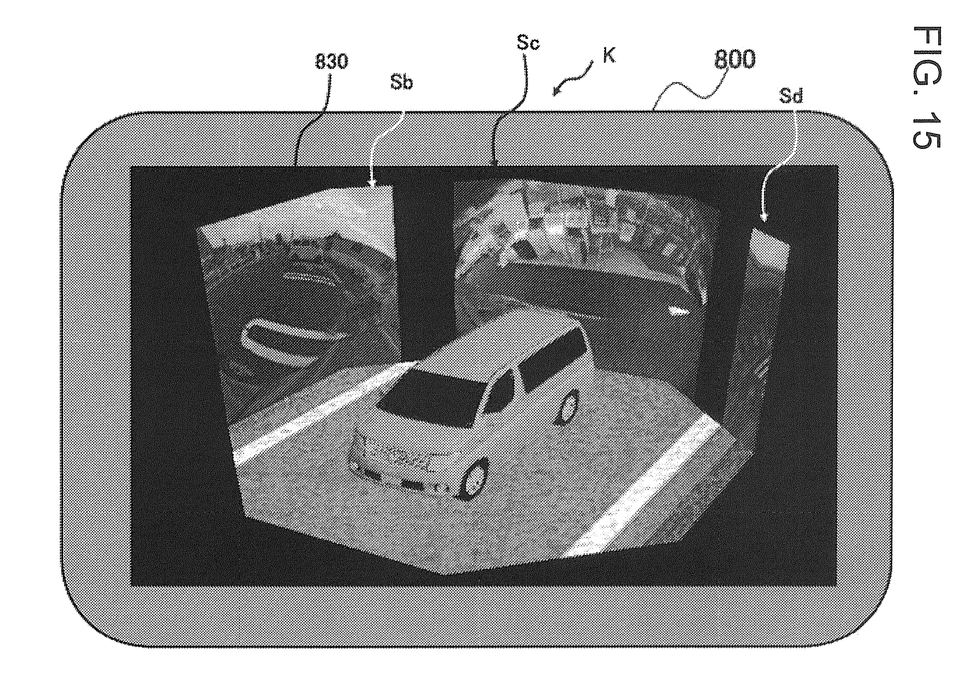

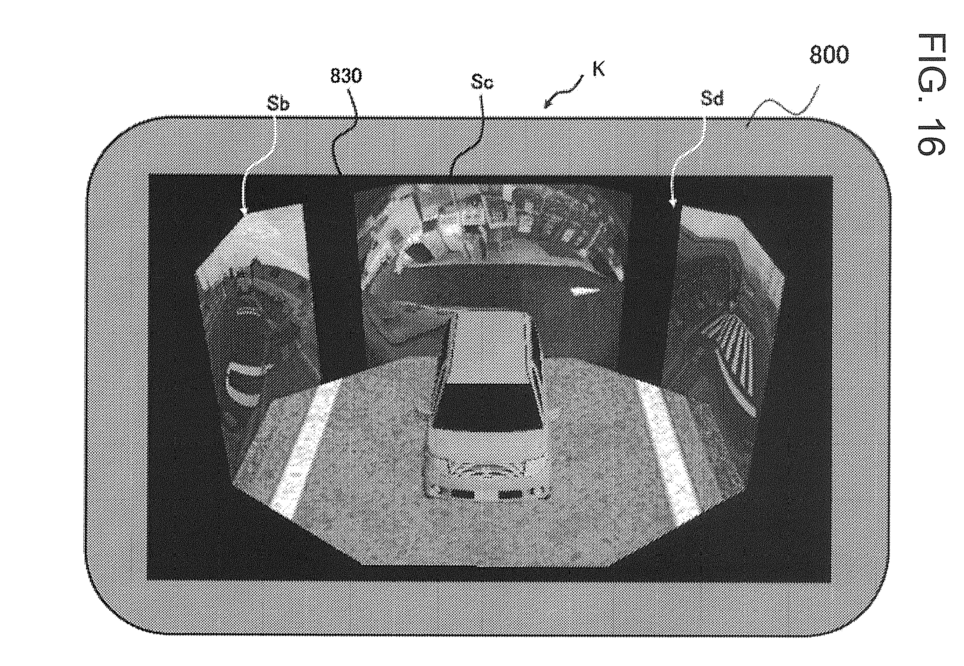

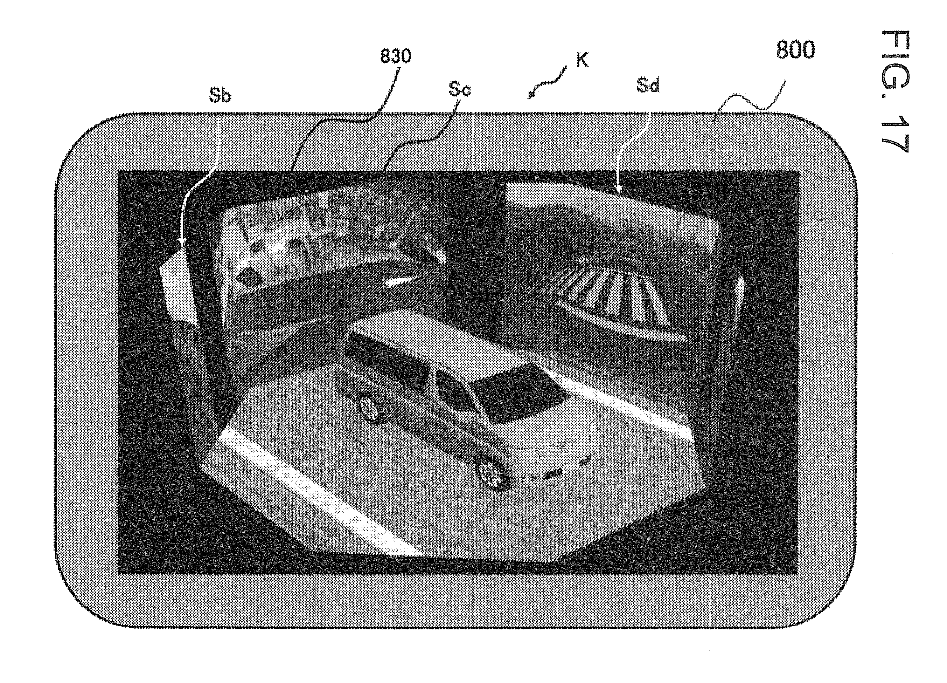

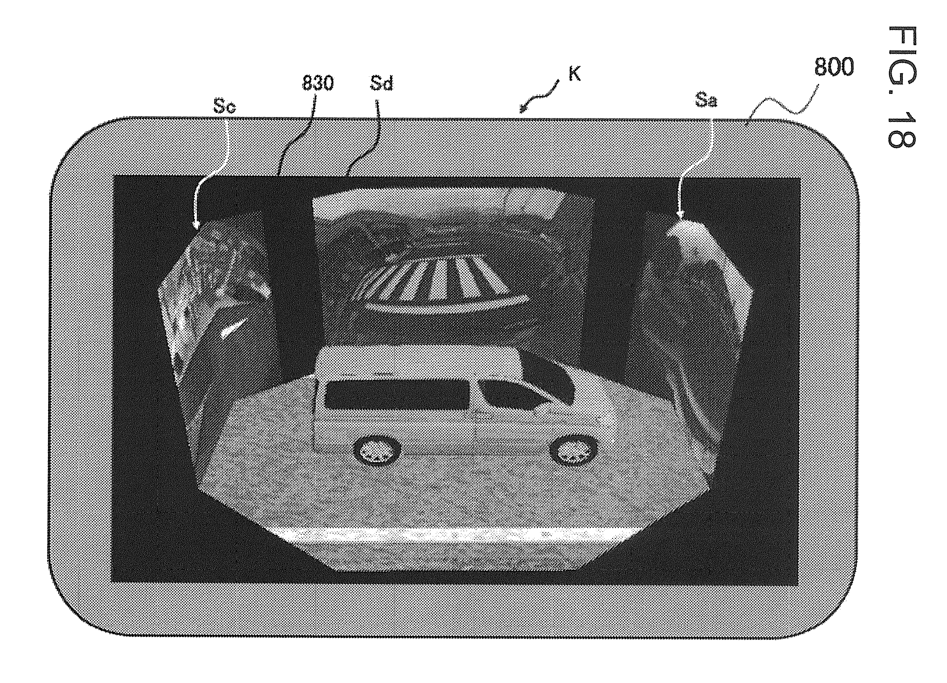

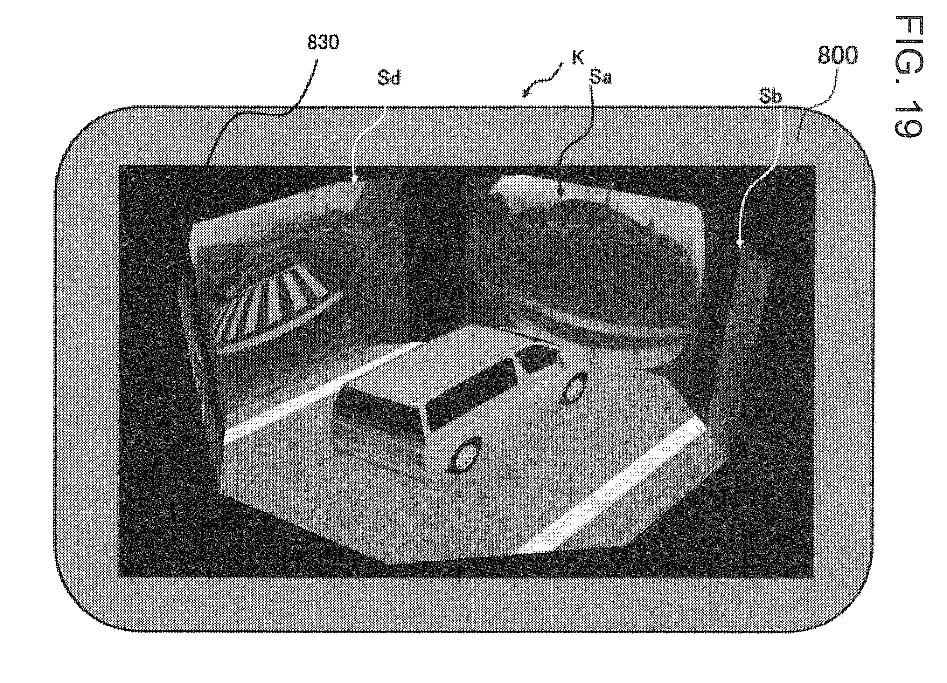

Similarly, Figure 13 shows the monitoring image K as seen from viewpoint R2, Figure 14 shows the monitoring image K as seen from viewpoint R3, Figure 15 shows the monitoring image K as seen from viewpoint R4, Figure 16 shows the monitoring image K as seen from viewpoint R5, Figure 17 shows the monitoring image K as seen from viewpoint R6, Figure 18 shows the monitoring image K as seen from viewpoint R7, and Figure 19 shows the monitoring image K as seen from viewpoint R8.

In this way, the terminal device 800 according to the present embodiment maps the monitoring image K, in which the captured images taken by each of the cameras 1 are disposed (horizontally) along the x axis direction or the y axis direction according to the order in which the cameras I are installed on the body of the vehicle V, along (horizontally) the sides of the columnar-shaped projection model M in the order in which the images are disposed, allowing the monitoring image K shown on the projection model M to present a picture of the surroundings of the vehicle V viewed panoramically clockwise.

In particular, showing an image of the vehicle V on the bottom surface of the projection model M, as shown in Figures 12-19, allows the orientation of the vehicle V and its positional relationship with the captured images to be easily determined. Specifically, the captured image GSP1 from the camera 1a provided on the front grille of the vehicle V can be projected on the projection surface S facing the front grille of the vehicle V, the captured image GSP4 from the camera 1d provided on the right side mirror of the vehicle V can be projected on the projection surface S facing the right side mirror of the vehicle V, the captured image GSP3 from the camera 1c provided on the rear of the vehicle V can be projected on the projection surface S facing the rear of the vehicle V, and the captured image GSP2 from the camera I b provided on the left side mirror of the vehicle V can be projected on the projection surface S facing the left side mirror of the vehicle V. In accordance with the present embodiment, a monitoring image K can be shown in which the picture of the surroundings of the vehicle V is projected with its positional relationships intact, as shown in Figures 12-19, allowing a user to easily determine what is occurring around the vehicle, and where.

Because Figures 12-19 are still images, they are incapable of showing the display image in a state of actual play, but the images shown on each of the projection surfaces S on the display screen of the display 830 are videos in the terminal device 800 of the present embodiment. In other words, a video of the captured area SP1 in front of the vehicle is projected on the projection surface S facing the front grille of the vehicle V, a video of the captured area SP4 to the right of the vehicle is projected on the projection surface S facing the right side mirror of the vehicle V, a video of the captured area SP3 to the rear of the vehicle is projected on the projection surface S facing the rear of the vehicle V, and a video of the captured area SP2 to the left of the vehicle is projected on the projection surface S facing the left side mirror of the vehicle V. In other words, a monitoring image K constituted by a plurality of videos based on captured images taken by different cameras 1 can be simultaneously played on the projection surfaces S shown in Figures 12-19.

The display 830 is capable of accepting touch panel input information, allowing a user to freely set and alter the viewpoint. Because the correspondence between the viewpoint positions and the projection surfaces S is pre-defined in the image processing device 820 or the display 830 described above, a monitoring image K corresponding to an altered viewpoint can be shown on the display 830 based on this correspondence.

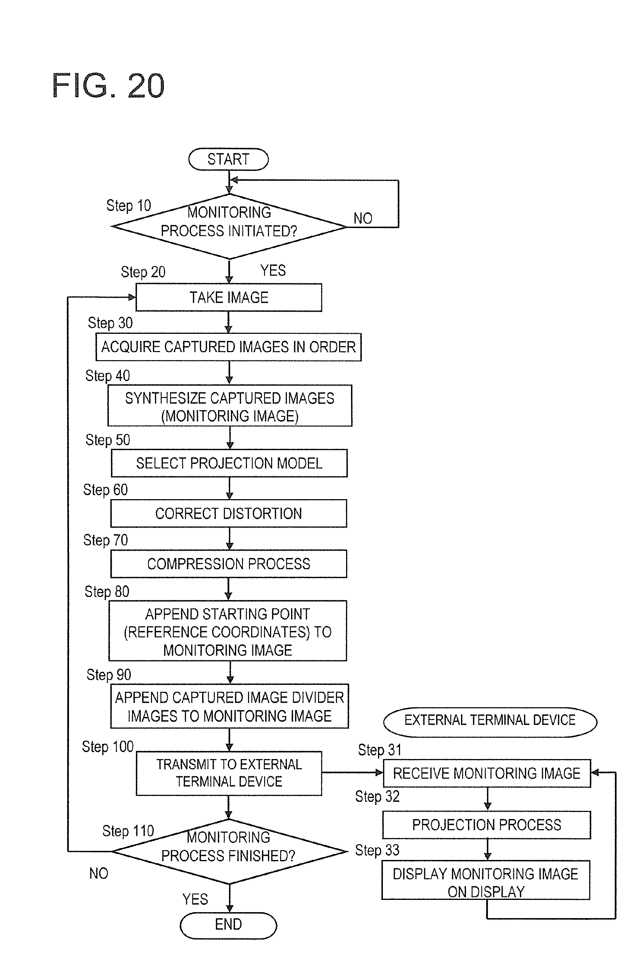

A process procedure of the vehicle monitoring system 1000 according to the present embodiment of the present invention will be described hereafter. Figure 20 is a flow chart showing a control process for the vehicle monitoring system 1000 according to the present embodiment.

In step 10, the control device 10 of the monitoring device 100 according to the present embodiment assesses whether a monitoring initiation timing has been reached. Although it is not particularly limited thereto, the monitoring device 100 according to the present embodiment is capable of initiating a monitoring process when an engine off signal inputted into the ignition switch 300 is inputted, and an electronic key of a vehicle V having a communication function is not present near the vehicle V (i.e., the user carrying the electronic key is away from the vehicle V), or when a monitoring image K request command is received from the external terminal device 800 of the user.

In step 20, the monitoring device 100 according to the present embodiment causes the plurality of cameras 1 installed on the vehicle V to start taking images. Next, in step 30, the monitoring device 100 acquires captured images taken by each of the cameras.

In step 40, the monitoring device 100 according to the present embodiment synthesizes the plurality of captured images taken by the cameras 1 installed in the clockwise or counterclockwise direction around the circumference of the body of the vehicle V so that the images are disposed according to the order in which the cameras 1 are installed, forming a single monitoring image K.

In step 50, the monitoring device 100 according to the present embodiment selects a projection model M to be used. The selected projection model M may be specified by a user in advance, or may be specified in advance according to vehicle model.

In step 60, the monitoring device 100 according to the present embodiment corrects distortion in the captured images. If the cameras 1 of the present embodiment are wide-angle cameras, image distortion will increase as distance from the center of the captured image increases (i.e., near the outer edge); thus, the monitoring device 100 can correct distortion in the captured images by performing a predetermined image conversion process. In the present embodiment, distortion is corrected with the monitoring image K being projected onto the projection model M, allowing a distortion correction process to be performed once the projection process has been performed. A suitable method known at the time of filing can be used to perform distortion correction.

In step 70, the monitoring device 100 according to the present embodiment compresses the image data so that the pixel count of the monitoring image K is substantially identical to the pixel count of the captured images taken by each of the cameras 1.

In step 80, the monitoring device 100 according to the present embodiment appends reference coordinates for the captured image disposed to the right or left edge of the monitoring image K to the monitoring image K as mapping information. The relative positions of the monitoring image K and the projection model M can thus be associated.

In a subsequent step 90, the monitoring device 100 according to the present embodiment appends linear graphics (divider images) indicating the boundaries of each of the captured images disposed in the monitoring image K to the monitoring image K.

In a subsequent step 100, the monitoring device 100 transmits the information containing a monitoring image K with associated mapping information obtained via the processes described above to the external terminal device 800. Then, in step 110, the process from step 20 onward is repeated until it is determined that the monitoring process has ended.

In step 31, the communication device 810 of the external terminal device 800, receives the monitoring image K sent from the monitoring device 100 along with the mapping information.

Next, in step 32, the image processing device 820 projects the monitoring image K onto the projection surfaces S of the projection model M according to the mapping information. A picture of the vehicle V can be appended to the bottom surface of the projection model M in advance.

Next, in step 33, the display 830 displays information including the monitoring image K projected on the projection model M.

In the present embodiment, an example in which the monitoring device 100 is disposed in the vehicle V has been described, but the method for monitoring the vehicle V according to the present embodiment of the present invention can be executed by various devices. In addition, part or all of the process of the method for monitoring the vehicle V according to the present embodiment of the present invention can be executed by a server (computer, control device) capable of exchanging information with a client (computer, control device) capable of controlling the cameras 1 and communication device 400. The server can be disposed at a remote location from the client.

The server can execute the following command to execute the vehicle monitoring method according to the present embodiment of the present invention. The command includes: a step of acquiring captured images from each of the plurality of cameras 1, installed at different positions on the body of the vehicle V, for capturing the surroundings of the vehicle V; a step of forming a single monitoring image K disposed according to the order in which the cameras 1 are installed in the clockwise or counterclockwise direction around the circumference of the body of the vehicle V based on the captured images taken by the cameras 1; a step of appending mapping information for projecting the formed monitoring image K onto the projection surfaces S established by the side of the columnar-shaped projection model M having the surface upon which the vehicle V rests as a bottom surface to the monitoring image K; and a step of transmitting the monitoring image K and the mapping information to the external terminal device 800. The specific content of the process is shared with the monitoring device 100 and the vehicle monitoring system 1000 according to the present embodiment; thus, the corresponding descriptions are invoked by reference.

The server executing the monitoring method described above performs a projection process for the monitoring image K, and forms an image for display in which the monitoring image K is projected onto the projection model M.

In this case, the server can execute the following command to execute the vehicle monitoring method according to the present embodiment of the present invention. The command includes: a step of acquiring captured images from each of the plurality of cameras 1, installed at different positions on the body of the vehicle V, for capturing the surroundings of the vehicle V; a step of forming a single monitoring image K disposed according to the order in which the cameras 1 are installed in the clockwise or counterclockwise direction around the circumference of the body of the vehicle V based on the captured images taken by the cameras 1; a step of appending mapping information for projecting the formed monitoring image K onto the projection surfaces S of the columnar-shaped projection model M having the surface upon which the vehicle V rests as a bottom surface to the monitoring image K; and a step of forming, based on the mapping information, a display image in which the monitoring image K is projected onto the projection surfaces S established by the side of the columnar-shaped projection model M having the surface upon which the vehicle V rests as a bottom surface. The server browsably stores the formed display image, and is capable of permitting browsing of the display image when accessed by the terminal device 800, allowing the display image to be displayed on the display 830 of the terminal device 800. The server may also, in response to a request from the terminal device 800, permit downloading of the display image, or transmit the display image to the terminal device 800 and display the image on the display 830 of the terminal device 800. The specific content of the process is shared with the monitoring device 100 and the vehicle monitoring system 1000 according to the present embodiment; thus, the corresponding descriptions are invoked by reference.

It is also possible to have the terminal device 800 perform the following command, control the operation of the terminal device 800, and execute the vehicle monitoring method according to the present embodiment of the present invention. The command includes: a step of receiving, via the communication line, a monitoring image K in which captured images from the plurality of cameras 1 installed at different positions on the body of the vehicle V are continuously disposed according to the order in which the cameras 1 are installed to the clockwise or counterclockwise direction around the circumference of the body of the vehicle V, and mapping information for projecting onto the projection surfaces S of the columnar-shaped projection model M having the surface upon which the vehicle V rests as a bottom surface; and a step of projecting the acquired monitoring image K onto the projection surfaces S of the columnar-shaped projection model M having the surface upon which the vehicle V rests as a bottom surface to form a display image, based on the mapping information. The specific content of the process is shared with the terminal device 800 according to the present embodiment; thus, the corresponding descriptions are invoked by reference.

The monitoring device 100, vehicle monitoring system 1000, and terminal device 800 according to the present embodiment of the present invention, which are constituted and operate as described above, yield the following effects.

In accordance with the monitoring device 100 according to the present embodiment, a single monitoring image K in which the captured images taken by the plurality of cameras 1a-1d are disposed in the order in which the cameras 1a-1d are installed , along with mapping information for projecting the monitoring image K onto the projection surfaces S established by the side of the columnar-shaped projection model M, is sent to the external terminal device 800, allowing a monitoring image K in which the plurality of captured images is disposed in a series in the order in which the cameras are installed to be projected onto the projection surfaces S established by the side of the prism; it is thus possible to play a monitoring image K formed from a plurality of captured images taken from different directions as a video regardless of the capabilities of various terminal devices. As a result, the information from the captured images obtained by the plurality of cameras is not wasted, and can be effectively used as monitoring images by a user.

In accordance with the monitoring device 100 according to the present embodiment, a monitoring image K in the form of a video is formed from captured images taken substantially simultaneously by each of the cameras 1, allowing the information from the captured images contained in the monitoring image K to be synchronized. It is thus possible to accurately represent the state of the vehicle periphery at a predetermined timing using a video based on the plurality of captured images.

In accordance with the monitoring device 100 according to the present embodiment, the image data is compressed so that the pixel count of the monitoring image K is substantially identical to the pixel count of the captured images from each of the cameras 1 to form the monitoring image K, allowing image processing and play to be executed regardless of the capabilities of the terminal device 800 receiving the monitoring image K.

In accordance with the monitoring device 100 according to the present embodiment, reference coordinates for the captured image disposed at the left or right end of the monitoring image K are appended to the monitoring image K, allowing the terminal device 800 receiving the monitoring image K to recognize the corresponding position relationship between the monitoring image K and the projection model M.

In accordance with the monitoring device 100 according to the present embodiment, divider images Bb, Bc, Bd, Ba serving as linear graphics indicating the boundaries of each of the disposed captured images are appended to the monitoring image K, allowing for monitoring images K constituting an integrated monitoring image K but having different imaging directions to be independently recognized. In addition, the high level of image distortion near the boundaries of the captured images suggests that divider images can be disposed at the boundaries of the captured images to conceal images of highly distorted areas, or to suggest that there is a high level of distortion.

In accordance with the monitoring device 100 according to the present embodiment, the monitoring image K is formed after distortion arising when the captured images are projected onto the projection surfaces S established by the side of the projection model M is corrected, allowing an easy-to-view monitoring image K with little distortion to be provided. Pre-correcting distortion also allows positional deviation of the horizontally-disposed captured images to be reduced. As a result, the conjoined plurality of captured images can be recognized by a user as a single monitoring image K.

Operation and effects similar to those yielded by the monitoring device 100, the monitoring system 1000, and the terminal device 800 can be obtained even when the method for monitoring the vehicle V according to the present embodiment is used.

All the embodiments described above are intended to aid understanding of the present invention, and do not limit the present invention. Thus, the various elements disclosed in the abovementioned embodiments encompass all design modifications and equivalents falling within the technical scope of the present invention.

In the present specification, the monitoring device 100 and vehicle monitoring system 1000 are described as an example of one aspect of the vehicle monitoring device according to the present invention, but such a configuration is not provided by way of limitation to the present invention.

Additionally, in the specification, the monitoring device 100 provided with the control device 10 comprising the CPU 11, ROM 12, and RAM 13 is described as an example of one aspect of the vehicle monitoring device according to the present invention, but such a configuration is not provided by way of limitation to the present invention.

In the present specification, the monitoring device 100 provided with the cameras 1 and the control device 10 for performing the monitoring image-forming function, mapping information-assigning function, and transmission function is described as an example of one aspect of the vehicle monitoring device according to the present invention, which comprises cameras 1, monitoring-image-forming means, mapping-information-appending means, and transmission means, but such a configuration is not provided by way oflimitation to the present invention.

In the present specification, the terminal device 800 provided with the communication device 810, the image processing device 820, and the display 830 is described as one aspect of a terminal device provided with communication means, image processing means, and display means, but such a configuration is not provided by way of limitation to the present invention.

In the present specification, the vehicle monitoring system 1000 provided with the monitoring device 100, the vehicle controller 200, the communication device 400, and the external terminal device 800 of the invention according to the present application is described as an example of one aspect of the vehicle monitoring system according to the present invention, but such a configuration is not provided by way of limitation to the present invention.

### <Second embodiment>

A vehicle monitoring system 1000 according to a second embodiment of the present invention will be described hereafter.

In connection with devices of this sort, as discussed above, an antitheft device is known in which, when an external stimulus detected by a door contact sensor or the like is detected, a camera is made to capture the surroundings, and image information for the same is forwarded to an external portable phone or the like. However, there is the problem that, if captured images from a plurality of cameras installed in a vehicle are sent to an external terminal device, a user will not know which captured image to pay attention to if the plurality of captured images is played simultaneously by the receiving terminal device, and will need time to confirm a target object of monitoring.

An object of the second embodiment of the present invention is to form a monitoring image that, while being formed based on a plurality of captured images, easily allows a user to determine the captured image to which attention should be directed.

The vehicle monitoring system 1000 according to the second embodiment of the present invention resolves the abovementioned problem by transmitting a monitoring image in which captured images taken by a plurality of cameras are disposed according to the order in which the cameras are installed, information on the position of a target object of monitoring detected in the surroundings of the vehicle being appended thereto, and mapping information for projecting the monitoring image onto a projection surface established by a side surface of a columnar-shaped projection model to an external terminal device.

In the vehicle monitoring system 1000 according to the second embodiment of the present invention, the external terminal device receiving the sent monitoring image is capable of projecting a continuous single monitoring image in which the plurality of captured images are disposed according to the order in which the cameras are installed on the projection surface established by the side of the prism based on the mapping information, and of projecting an image of the target object of monitoring at a desired position based on the information on the position of the target object of monitoring appended to the monitoring image, allowing a monitoring image to be displayed in which the target object of monitoring to which attention should be direction can easily be determined. As a result, it is possible to draw a user's attention to the image of the target object of monitoring, allowing the time needed to confirm the target object of monitoring to be reduced, and the convenience of the remote monitoring of the vehicle to be increased.

The vehicle monitoring system 1000 according to the second embodiment is characterized in being provided with a proximity sensor for detecting the position of a target object of monitoring detected in the surroundings of the vehicle, in a monitoring image associated with information on the position of a target object of monitoring detected in the surroundings of the vehicle being formed by the proximity sensor, and in a monitoring image in which the position of a target object of monitoring and the mapping information are associated with each other being sent to the terminal device 800, and shares the basic constitution and operation of the vehicle monitoring system 1000 according to the first embodiment. In the present embodiment, the description of the first embodiment is invoked by reference in order to avoid redundant description, and redundant description will be omitted.

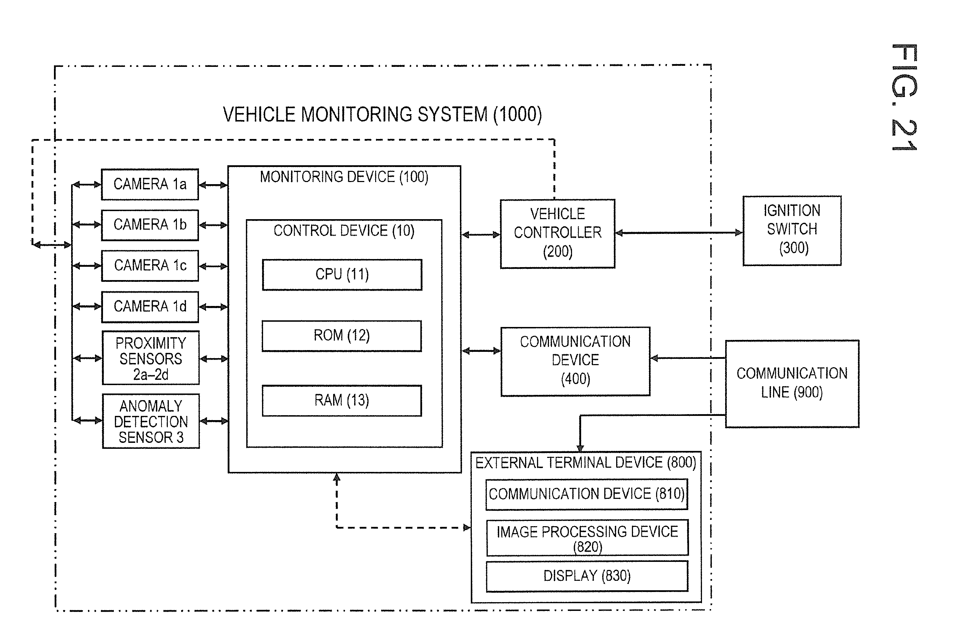

Figure 21 is a block diagram of the vehicle monitoring system 1000 comprising the monitoring device 100 according to the present embodiment. As shown in Figure 21, the vehicle monitoring system 1000 according to the present embodiment is provided with four cameras 1a-1d (also collectively referred to as the "cameras 1" hereafter) installed on the vehicle, proximity sensors 2a-2d, and an anomaly sensor 3.

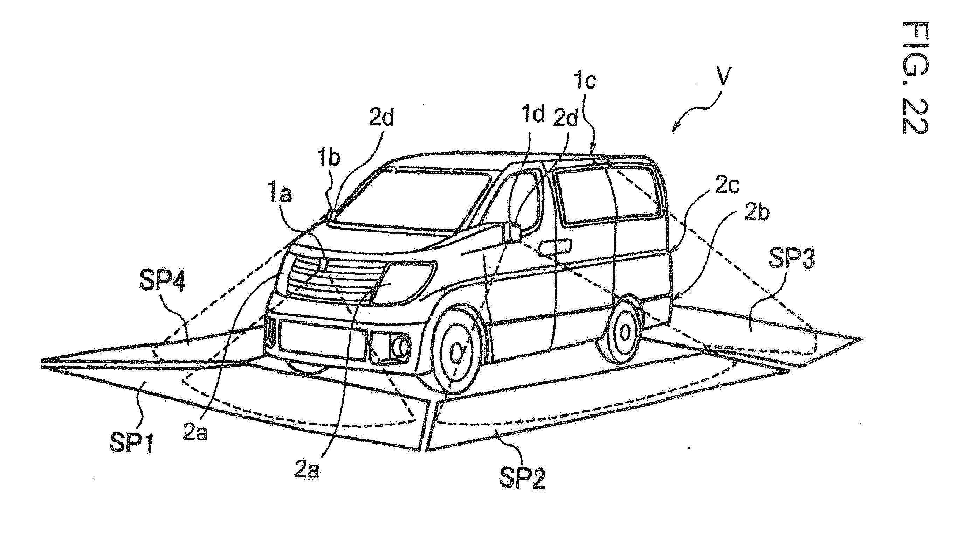

As shown in Figure 22, the cameras 1a-1d are attached to a vehicle V. The cameras 1a-1d are disposed at positions similar to those of the cameras 1a-1d of the first embodiment shown in Figure 2, and capture the areas shown in Figure 3, like the first embodiment. The front camera 1a captures area SP1 to obtain a captured image GSP1 (see, for example, Figure 4). The right-side camera 1b captures area SP4 to obtain a captured image GSP4 (see, for example, Figure 5). The rear camera 1c captures area SP3 to obtain a captured image GSP3 (see, for example, Figure 6). The left-side camera 1d captures area SP2 to obtain a captured image GSP2 (see, for example, Figure 7). Each of the captured images has a size of 480 pixels (vertical) × 640 pixels (horizontal). There is no particular limitation upon the size of the captured images; any size allowing for video play by a typical terminal device is possible.

The number and positions of cameras I can be determined, as appropriate, according to the size, shape, detection area setting method, and the like of the vehicle V. Each of the plurality of cameras 1 is assigned an identifier according to its address (position), and the control device 10 is capable of identifying each of the cameras 1 based on the identifiers. The control device 10 is also capable of transmitting activation commands and other commands to a specific camera 1 by assigning an identifier.

As shown in Figure 22, proximity sensors 2a-2d for detecting a target object of monitoring are provided near the cameras 1a-1d. The proximity sensors 2a-2d are ultrasonic sensors, infrared sensors, electrostatic sensors, or the like. The proximity sensors 2a-2d are capable of detecting whether or not an object is present in a predetermined area around the vehicle V, whether an object in the surroundings of the vehicle V is moving toward or away from the vehicle V, and the direction in which an object is present based on the positions at which the proximity sensors 2a-2d are installed. The proximity sensors 2a-2d transmit detected results for objects to the monitoring device 100.

As shown in Figure 21, the vehicle monitoring system 1000 according to the present embodiment is further provided with a vehicle door contact sensor, tilt sensor, intrusion sensor, or other type of vehicle anomaly detection sensor 3 for detecting a target object of monitoring. A door contact sensor can detect the presence of a target object of monitoring when a moving object contacts a door, a tilt sensor can detect the presence of a target object of monitoring when the vehicle tilts at least a predetermined level, and an intrusion sensor can detect the presence of a target object of monitoring when a vehicle intrusion trigger, such as a door being forced open or a window broken, occurs. A contact sensor is capable of detecting the position (direction) of the target object of monitoring by identifying that a human has touched a door, a tilt sensor is capable of detecting the position (direction) of the target object of monitoring from the direction in which the vehicle tilts, and an intrusion sensor is capable of detecting the position (direction) of the target object of monitoring from the position of the window or door in which an anomaly has occurred. The anomaly detection sensor 3 is not limited to being a contact sensor, tilt sensor, or intrusion sensor as described above; any sensor having a function of detecting the presence and position of a target object of monitoring that could potentially apply external force to the vehicle can be applied. The anomaly detection sensor 3 may be provided in lieu of the proximity sensors 2a-2d, or in addition to the proximity sensors 2a-2d.

As shown in Figure 21, the vehicle monitoring system 1000 according to the present embodiment also comprises a monitoring device 100, a vehicle controller 200, a communication device 400, and an external terminal device 800. The vehicle monitoring system 1000 is provided with an ignition switch 300 capable of exchanging information with the vehicle controller 200. The devices are connected by a controller area network (CAN) or other type of onboard LAN, and can exchange information with each other.

In the vehicle monitoring system 1000 according to the present embodiment, the monitoring device 100 is capable of communicating via the communication device 400 with the external terminal device 800 (computer), which is provided with a communication device 810, such as a portable phone or smart phone. The external terminal device 800 of the present embodiment is provided with the communication device 810, an image processing device 820, and a display 830, the communication device 810 acquiring monitoring images from the onboard monitoring device 100, the image processing device 820 executing image processes necessary to display monitoring images, and the display 830 displaying monitoring images. A user in possession of the external terminal device 800 can use the external terminal device 800 to confirm vehicle monitoring images sent from the monitoring device 100.

As shown in Figure 21, the control device 10 of the monitoring device 100 according to the present embodiment is provided with read-only memory (ROM) 12 for storing a program for forming a monitoring image based on the plurality of monitoring images and associated with the position of a target object of monitoring, associating the monitoring image with mapping information for projecting the monitoring image upon a projection surface established by a side surface of a columnar-shaped projection model, and transmitting the monitoring image and mapping information to the external terminal device 800, a central processing unit (CPU) 11 functioning as an operation circuit allowing for functioning as a monitoring device 100 by executing the program stored in the ROM 12, and random-access memory (RAM) 13 functioning as an accessible storage device.

The control device 10 of the monitoring device 100 according to the present embodiment is capable of executing various functions through the cooperation of the hardware described above and software for performing a monitoring object-detecting function, a monitoring image-forming function, a mapping information-assigning function, and a transmission function. In the present embodiment, an aspect in which the control device 10 transmits various control commands will be described; it is also possible for the control device 10 of the present embodiment to control the cameras I and the communication device 400 via the vehicle controller 200.

The monitoring object-detecting function, monitoring image-forming function, mapping information-assigning function, and transmission function performed by the monitoring device 100 according to the present embodiment of the present invention will be described hereafter.

First, the monitoring object-detecting function will be described. The control device 10 of the monitoring device 100 according to the present embodiment detects the position of a target object of monitoring in the surroundings of the vehicle V. In the present embodiment, there is no particular limitation upon the target object of monitoring, but it is an object of a certain height that is capable of moving, such as a human.

Although not particular limited thereto, the control device 10 of the monitoring device 100 according to the present embodiment is capable of detecting the position (including distance) of a target object of monitoring based on the captured images taken by the cameras 1, of detecting the position (including distance) of a target object of monitoring based on the results detected by the proximity sensors 2, and of detecting the position (including distance) of a target object of monitoring based on the results detected by the anomaly detection sensor 3.

Specifically, the control device 10 of the monitoring device 100 according to the present embodiment is provided with an image processing control unit (IPCU). The control device 10 is capable of using the image processing control unit to analyze the captured images taken by each of the cameras 1, extracting an image corresponding to an object from the captured image data, and determining whether or another the object is three-dimensional, and whether or not the detected object is a moving object based on the amount of movement in the extracted image. For example, the control device 10 can use the image processing control unit described above to determine that a three-dimensional, moving object has been detected if an image corresponding to an object of at least a predetermined height is detected in the captured images taken by the cameras 1, and the position of the image changes over time. A method known at the time of filing can be used, as appropriate, as the image processing method for detecting a target object of monitoring constituted by a three-dimensional, moving object.

The control device is also capable of detecting the presence of a three-dimensional, moving object based on detected results acquired from the proximity sensors 2a-2d, and detecting a target object of monitoring approaching the vehicle based on changes in the position of the three-dimensional, moving object.

The control device 10 is also capable of detecting the presence and position of a target object of monitoring exerting an external force upon the vehicle based on detected results acquired from the anomaly detection sensor 3.

If a plurality of objects of monitoring is detected in the surroundings of the vehicle V, the control device 10 can take the position of the target object of monitoring nearest the vehicle V as the detected results. The information on the position of the target object of monitoring is used in the monitoring image-forming process described hereafter.

Next, the monitoring image-forming function will be described. The control device 10 of the monitoring device 100 according to the present embodiment acquires captured images from each of the cameras 1, and forms a single monitoring image in which the captured images from the cameras 1 installed in the left or right direction around the circumference of the body of the vehicle V are disposed according to the order in which the cameras 1 are installed, the image being associated with information on the position of the detected target object of monitoring.

In the present embodiment, as described above, the cameras 1 are installed in the order camera 1a, 1b, 1c, 1d going right (i.e., clockwise) around the circumference VE of the body of the vehicle V; thus, the control device 10 horizontally connects the plurality of captured images taken by the cameras I in the order (camera 1a, 1b, 1c, 1d) in which the cameras I are installed to form a single whole, forming a single monitoring image. In the monitoring image according to the present embodiment, the captured images are disposed so that the surface upon which the vehicle V rests (i.e., the road surface) is at the lower edge of the image, and the captured images are connected at the sides corresponding to the height direction (perpendicular direction) with respect to the road surface.

The monitoring image K shown in Figure 8 for the first embodiment can be formed in the present embodiment as well. In the monitoring image K, the captured image GSP1 of area SP1 taken by the front camera 1a, captured image GSP4 of area SP4 taken by the right-side camera 1b, captured image GSP3 of area SP3 taken by the rear camera 1c, and captured image GSP2 of area SP2 taken by the left-side camera 1d are horizontally disposed in a direction P traveling from the left side to the right side of the Figure in the left-to-right order GSP1, GSP4, GSP3, GSP2 so that the four captured images form a series. The monitoring image K contains captured image GSP1, captured image GSP4, captured image GSP3, and captured image GSP2 aligned in a horizontal row.

The monitoring image K thus formed is displayed in order from left to right so that the part of the image corresponding to the road surface (the surface upon which the vehicle rests) is at the bottom, allowing a picture showing a panoramic view of the surroundings of the vehicle V as seen in the clockwise direction to be presented to the user.

When forming a single monitoring image K, the control device 10 of the monitoring device 100 according to the present embodiment can use captured images taken substantially simultaneously by the cameras 1. The information contained in the monitoring image K can thus be synchronized, thereby allowing the state of the vehicle surroundings to be accurately represented at a predetermined timing. If the captured image GSP1 of the front of the vehicle and the captured image GSP4 of the right of the vehicle contained within the same monitoring image K are taken at different timings, images having different image timings are formed when the monitoring image K is formed, creating an unnatural effect for a user viewing the image; however, in the monitoring device 100 of the present embodiment, the monitoring image K is formed using captured images taken substantially simultaneously, avoiding such unnaturalness.

The control device 10 according to the present embodiment stores monitoring images K formed from captured images taken by cameras having substantially identical image timings over time, allowing a monitoring image K constituted by a video containing a plurality of monitoring images K for a predetermined period of time to be formed. Forming the monitoring image K as a video based on substantially simultaneously taken captured images allows changes in the state of the vehicle surroundings to be accurately represented.

However, if captured images for each of the captured areas are stored over time, and a monitoring image K constituted by a video formed for each of the captured areas is sent to a terminal device, it may not be possible to simultaneously play the plurality of videos depending upon the capabilities of the terminal device. Because conventional terminal devices cannot simultaneously play and display a plurality of videos, the devices must switch screens and play the videos one at a time when playing the videos back. In other words, it is impossible to simultaneously view pictures (videos) for a plurality of directions using conventional terminal devices, leading to the drawback that the entire vehicle surroundings cannot be monitored on a single screen.

By contrast, in the control device 10 according to the present embodiment, a single monitoring image K is formed from a plurality of captured images, allowing captured images for different imaging directions to be simultaneously played as videos regardless of the capabilities of the terminal device 800. In other words, the monitoring image K is continuously played (video play), thereby allowing the four captured images contained within the captured image to be simultaneously and continuously played (video play), and changes in the state of areas in different directions to be monitored on a single screen.

In the control device 10 of the monitoring device 100 according to the present embodiment, it is also possible to compress image data to form the monitoring image K so that the pixel count of the monitoring image K is substantially identical to the pixel count for the captured images taken by each of the cameras 1. The size of the square captured images shown in Figures 4-7 is 480 × 640 pixels. As shown in Figure 8, the control device 10 according to the present embodiment performs a compression process so that the size of the monitoring image K is 1280 × 240 pixels. The size of the monitoring image K (1280 × 240 pixels) is thus made equal to that of the captured images (480 × 640 pixels), allowing image processing and play to be executed regardless of the capabilities of the terminal device 800 receiving the monitoring image K.

The control device 10 of the monitoring device 100 according to the present embodiment is also capable of appending information (coordinate values, or area values on a coordinate system) showing the position of a target object of monitoring to the monitoring image K. If a plurality of objects of monitoring are detected in the surroundings of the vehicle V, the control device 10 can append the position of the target object of monitoring nearest the vehicle V to the monitoring image K.

By appending the position of the target object of monitoring to the monitoring image K in this way, a monitoring image K showing the target object of monitoring from a head-on viewpoint is projected based on the information on the position of the target object of monitoring when the monitoring image K is displayed by the external terminal device 800, allowing an monitoring image K to be displayed in which that captured image, out of the plurality of captured images contained in the monitoring image K, to which attention should be directed can easily be determined. As a result, it is possible to draw a user's attention to the captured image containing the image of the target object of monitoring, allowing the time needed to confirm the target object of monitoring to be reduced, and the convenience of the remote monitoring of the vehicle to be increased.

When a target object of monitoring is detected, the control device 10 of the monitoring device 100 according to the present embodiment is also capable of forming a monitoring image K in which only a captured image of a predetermined area centered on the image of the target object of monitoring is disposed.

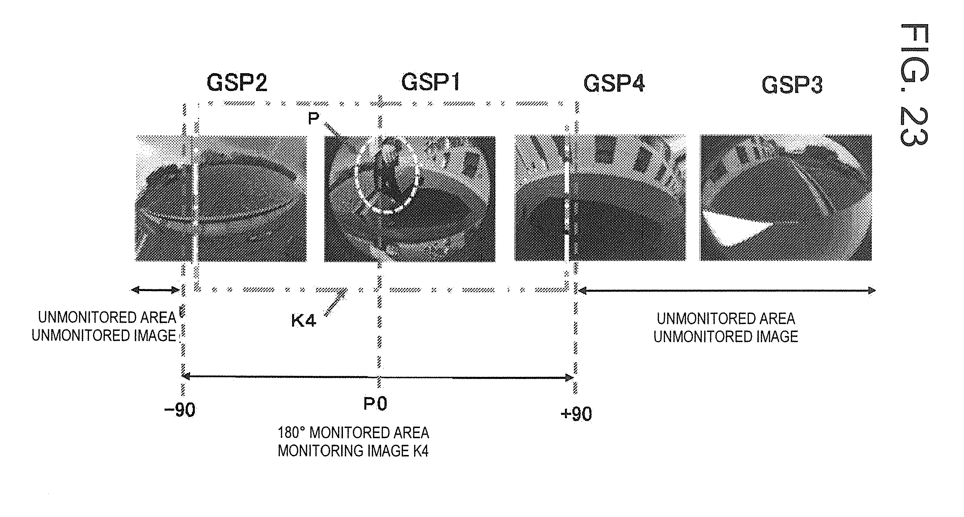

Specifically, as shown in Figure 23, when a captured image GSP2 has been acquired from the camera 1d installed at the left side mirror, a captured image GSP1 from the camera 1a installed on the front grille, a captured image GSP4 from the camera 1b installed at the right side mirror, and a captured image GSP3 from the camera 1c installed at the rear, the control device 10 according to the present embodiment is capable of taking a position P on an image corresponding to a target object of monitoring as a reference point PO, creating an image of a monitored area corresponding to a 90° in the left and right (180° total) as a monitoring image K4, and forming a monitoring image K in which only the monitoring image K4 is disposed. Figure 23 corresponds to Figure 8, which was described in the context of the first embodiment.

By disposing a target object of monitoring in the center and cutting out images in which no target object of monitoring was detected and which therefore do not require monitoring, a monitoring image K4 allowing for easy tracking of the movement of the target object of monitoring can be formed. Moreover, the amount of data transmitted as the monitoring image K can be reduced. As a result, the total amount of communication data when transmitting the monitoring image K to the terminal device 800 can be reduced, reducing the communication load upon the monitoring system when in operation.

In the control device 10 of the monitoring device 100 according to the present embodiment, linear graphics indicating the boundaries of each of the disposed captured images can be further appended to the monitoring image K, as in the case of the monitoring image K according to the first embodiment shown in Figure 8. Taking the monitoring image K shown in Figure 8 as an example, the control device 10 is capable of appending rectangular divider images Bb, Bc, Bd, Ba to the monitoring image K between each of the captured images as linear graphics indicating the boundaries of each of the disposed captured images. Disposing divider images at the boundaries of the captured image in this way allows each of the monitoring image K constituting an integrated monitoring image K but having different imaging directions to be independently recognized. In other words, the divider images serve as frames for the captured images. In addition, because of the high level of image distortion near the boundaries of the captured images, divider images can be disposed at the boundaries of the captured images to conceal images of highly distorted areas, or to suggest that there is a high level of distortion.

The control device 10 of the monitoring device 100 according to the present embodiment is capable of forming the monitoring image K after correcting distortion arising when the captured images are projected onto a projection surface established by the side of a projection model to be described hereafter. The areas around the edges of the captured image have a tendency to exhibit image distortion, and the tendency toward distortion in the captured images is especially increased when the cameras 1 are wide-angle cameras. Thus, in the present embodiment, distortion in the captured images is corrected using a pre-defined image conversion algorithm and correction level in order to correct image distortion.

Although it is not particularly limited thereto, the control device 10 is capable, as in the case of the first embodiment shown in Figure 9, of loading information for a projection model identical to the projection model upon which the monitoring image K is projected in the terminal device 800 from the ROM 12, projecting the captured images onto a projection surface of the projection model, and pre-correcting distortion arising on the projection surface. The image conversion algorithm and correction level can be defined, as appropriate, according to the features of the cameras 1 and the shape of the projection model, and a method known at the time of filing can be used to this end.

Pre-correcting distortion arising when the image K is projected onto the projection surface of the projection model in this way allows an easy-to-view monitoring image K exhibiting little distortion to be provided. Pre-correcting distortion also allows positional deviation of the horizontally-disposed captured images to be reduced.

Next, the mapping information-assigning function of the monitoring device 100 according to the present embodiment will be described. In the monitoring device 100 according to the present embodiment, the control device 10 is capable of appending mapping information for projecting the formed monitoring image K onto a projection surface established by a side of a columnar-shaped projection model M, the bottom surface of which is constituted by the surface upon which the vehicle V rests, to the monitoring image K.

The projection model M shown in Figures 10 and 11 for the first embodiment can be formed in the present embodiment as well. Figure 10 is a perspective view of a projection model M, and Figure 11 is a cross-sectional schematic view of the projection model M along a plane xy. The projection model M used in the present embodiment is the same as the projection model M used in the first embodiment; description thereof will therefore be omitted.

The monitoring image K projected on the projection model M is thus capable of presenting a picture in which the surroundings of the vehicle V is viewed panoramically. In other words, the monitoring image K, which contains the captured images disposed in a single horizontal row according to the order in which the cameras 1 are installed, is projected on similarly aligned sides of the prism of the projection model M, allowing the positional relationships in the picture of the surroundings of the vehicle V to be reproduced in the monitoring image K projected on the projection surfaces S of the columnar-shaped projection model M.

The control device 10 according to the present embodiment can store the association between the coordinate values of the monitoring image K and the coordinate values of the projection surfaces S of the projection model M as mapping information, appending the information to the monitoring image K. The control device 10 of the present embodiment is capable of associating information on the position of the target object of monitoring detected by the proximity sensors 2a-2d and the mapping information (i.e., the correspondence between the coordinate values of the monitoring image K and the coordinate values of the projection surfaces S of the projection model M) to form the monitoring image K. The mapping information constituted by the correspondence between the coordinate values of the monitoring image K and the coordinate values of the projection surfaces S of the projection model M can also be pre-stored in the terminal device 800.

The positions of the viewpoints R and projection surfaces S shown in the drawing are merely examples, and can be set as desired. In particular, the viewpoints R can be altered by a user. The relationship between the viewpoints R and the projection position of the monitoring image K is predefined, and a monitoring image K as view from newly set viewpoints R can be projected on the projection surfaces S (Sa-Sd) by performing a predetermined coordinate conversion when the positions of the viewpoints R are altered. A method known at the time of filing can be used for this viewpoint conversion process.

In addition, by associating the information on the position of the detected target object of monitoring and the mapping information, the control device 10 of the monitoring device 100 according to the present embodiment is capable of setting a monitoring viewpoint viewing the detected target object of monitoring head-on on the projection surfaces S established by the side of the columnar-shaped projection model M having the surface upon which the vehicle V rests as a bottom surface, and appending mapping information for projecting a monitoring image K seen from this monitoring viewpoint onto the projection surfaces S to the monitoring image K.

Here, the monitoring viewpoint viewing an image of the detected target object of monitoring head-on discussed in the present embodiment is a viewpoint allowing the target object of monitoring to be viewed from the front. Taking the projection model M shown in Figure 11 as an example, the monitoring viewpoint is R1 if a target object of monitoring is present in area SP1 to the front of the vehicle, R3 if a target object of monitoring is present in area SP4 to the right of the vehicle, R5 if a target object of monitoring is present in area SP3 to the rear of the vehicle, and R7 if a target object of monitoring is present in area SP2 to the left of the vehicle. Similarly, the viewpoint is R2 if a target object of monitoring is present in the area where areas SP1 and SP4 overlap diagonally to the front and right of the vehicle, R4 if a target object of monitoring is present in the area where areas SP4 and SP3 overlap diagonally to the rear and right of the vehicle, R6 if a target object of monitoring is present in the area where areas SP3 and SP2 overlap diagonally to the rear and left of the vehicle, and R8 if a target object of monitoring is present in the area where areas SP2 and SP1 overlap diagonally to the front and left of the vehicle.

In particular, if mapping information for projecting the monitoring image K with which the information on the position of the detected target object of monitoring is associated onto the projection surfaces S from a viewpoint such that an image of the target object of monitoring is viewed head-on is appended to the monitoring image K, the terminal device 800 can project a monitoring image K having a monitoring viewpoint in which an image of the target object of monitoring is viewed head-on onto the projection surfaces S.

Specifically, coordinates for a monitoring viewpoint in which the image of the target object of monitoring is seen head-on and information indicating the starting end position or finishing end position of the captured image (monitoring image K) containing the target object of monitoring, i.e., reference coordinates used as a reference during the projection process, can be included in the mapping information according to the present embodiment. The terminal device 800 receiving the monitoring image K is thereby capable of recognizing a reference position used when a captured image viewed head-on from a monitoring viewpoint is projected onto the projection model M, enabling it to display a monitoring image K in which the target object of monitoring is viewed head-on on the display 830.

In addition, the association of the position of the image of the target object of monitoring with the mapping information allows the monitoring image K to be projected on the projection model M so that the image of the target object of monitoring is displayed at a desired position on the projection surfaces S or the display 830, such as the center of the display screen. There is no particular limitation upon the method used to shift the projection position; it is sufficient for the level of deviation of the image of the target object of monitoring to be calculated from a reference point such as the center of the captured image, and the projection position shifted according to the level of deviation calculated from a projection position based on the reference coordinates of the monitoring image K. It is thereby possible to display an image of the target object of monitoring in the center of the projection model M or in the center of the display 830. The image of the target object of monitoring displayed in the center of the projection model M or the center of the display 830 is capable of showing the position of the target object of monitoring in an easy-to-read manner so as to draw the attention of a user.

Taking the projection model M shown in Figure 11 as an example, performing the projection process according to the mapping information of the present embodiment will cause a monitoring image K projected on head-on view projection surfaces Sa and Sb as viewed from viewpoint R2 to be displayed substantially in the center of the display 830 of the terminal device 800 when a target object of monitoring is present diagonally to the front and right of the vehicle V, a monitoring image K projected on head-on view projection surfaces Sb and Sc as viewed from viewpoint R4 to be displayed substantially in the center of the display 830 of the terminal device 800 when a target object of monitoring is present diagonally to the rear and right of the vehicle V, a monitoring image K projected on head-on view projection surfaces Sc and Sd as viewed from viewpoint R6 to be displayed substantially in the center of the display 830 of the terminal device 800 when a target object of monitoring is present diagonally to the rear and left of the vehicle V, and a monitoring image K projected on head-on view projection surfaces Sd and Sa as viewed from viewpoint R8 to be displayed substantially in the center of the display 830 of the terminal device 800 when a target object of monitoring is present diagonally to the front and left of the vehicle V. Similarly, an image of the target object of monitoring is contained in the head-on view projection surfaces S described above.

The control device 10 according to the present embodiment forms monitoring images K based on captured images taken at predetermined timings, and stores the monitoring images K over time according to the image timing in association with information for mapping information, reference coordinates, and boundary-indicating linear graphics (divider images). Although not particularly limited to one way or the other, the control device 10 may store the monitoring images K as a single video containing a plurality of monitoring images K for a predetermined period of time, or may store the monitoring images K in a format allowing for streaming forwarding and play.

Next, the communication function of the control device 10 according to the present embodiment will be described. The control device 10 is capable of transmitting information containing the formed monitoring image K to the external terminal device 800 via a communication line 900 capable of being used as a public communication network.

The terminal device 800 for receiving and displaying the monitoring image K will be described below.

The terminal device 800 is disposed externally to the monitoring device 100 described above, and is provided with a communication device 810 for communicating with the monitoring device 100, an image processing device 820 for converting acquired images to an image for display, and a display 830 for displaying converted monitoring images K for display.

The communication device 810 receives the monitoring image K with the position of the target object of monitoring appended and the mapping information associated with the monitoring image K sent by the monitoring device 100. The monitoring image K shows captured images taken by a plurality of cameras 1 installed at different positions on the body of the vehicle V, the captured images being disposed in the clockwise or counterclockwise direction around the circumference of the body of the vehicle V according to the order in which the cameras 1 are installed (i.e., the order thereof in the clockwise or counterclockwise direction around the circumference of the body of the vehicle V). Information on the position of the target object of monitoring is appended to the monitoring image K. The monitoring image K has associated mapping information for projecting the monitoring image K onto the projection surfaces S of the columnar-shaped projection model M. The communication device 810 transmits the acquired monitoring image K and mapping information to the image processing device 820.

The image processing device 820 loads the pre-stored projection model M, and forms a display image in which the monitoring image K is projected onto the projection surfaces Sa-Sd established by the sides of the columnar-shaped projection model M having the surface upon which the vehicle V rests as a bottom surface shown in Figures 10 and 11 based on the mapping information. Specifically, a starting point of the monitoring image K (i.e., a right or left edge of the monitoring image K) is recognized based on the reference coordinates received along with the monitoring image K, the starting point is aligned with a predefined starting point (right or left edge of the projection surfaces S) of the projection model M, and the pixels of the monitoring image K are projected (mapped) onto the pixels of the projection surfaces Sa-Sd in accordance with the mapping information.

When projecting the monitoring image K onto the projection model M, the image processing device 820 forms a display image in which a monitoring image K of an image of the detected target object of monitoring is viewed from a head-on monitoring viewpoint on the projection surface S provided on a side of the columnar-shaped projection model. Specifically, when projecting a monitoring image K onto the projection model M, the image processing device 820 selects of viewpoint in which an image of the target object of monitoring is viewed head-on based on the information (coordinates) for the position of the target object of monitoring received along with the monitoring image K, and forms a display image in which the target object of monitoring is viewed head-on.

The image processing device 820 is not limited to the method described above; if an image of the target object of monitoring is displayed displaced to the left or right of the display 830 after the mapping process is performed based on the mapping information, the monitoring image K projected onto the columnar-shaped projection model M can be rotated so that the image of the target object of monitoring is displayed substantially in the center of the display 830. It is thus possible to display a display image containing an image of the target object of monitoring viewed head-on.

The process of rotating the projection model M so that the projection surface S onto which the head-on image of the target object of monitoring is projected is positioned in the center of the initial screen may be performed before projecting the monitoring image K onto the projection model M or after projecting the monitoring image K onto the projection model M.

During projection of the monitoring image K onto the projection model M, the image processing device 820 disposes linear graphics (divider images) indicating the boundaries of the captured images on the projection model M. The divider images can be pre-appended to the projection model M, or can be appended to the monitoring image K following the projection process.

The example of the display image of the monitoring image K of the present embodiment is the same as that used for the first embodiment, thus, the descriptions of Figures 12-19 from the first embodiment are invoked by reference.

Figure 12 shows a monitoring image K projected onto projection surfaces Sd, Sa, Sb from viewpoint R1 shown in Figures 10 and 11. An image of the vehicle V as seen from the viewpoints R is applied to the bottom surface of the projection model M. The parts between the projection surfaces Sd, Sa, Sb where images are not displayed are "boundary-indicating linear graphics (divider images)". Similarly, Figure 13 shows the monitoring image K as seen from viewpoint R2, Figure 14 shows the monitoring image K as seen from viewpoint R3, Figure 15 shows the monitoring image K as seen from viewpoint R4, Figure 16 shows the monitoring image K as seen from viewpoint R5, Figure 17 shows the monitoring image K as seen from viewpoint R6, Figure 18 shows the monitoring image K as seen from viewpoint R7, and Figure 19 shows the monitoring image K as seen from viewpoint R8.

As shown in Figures 12-19, a target object of monitoring is present to the left and front of the vehicle V (in the area where areas SP1 and SP2 overlap in Figure 3), and the image of the target object of monitoring is contained in the captured image GSP1 taken by camera 1a (see Figure 4) and the captured image GSP2 taken by camera 1d (see Figure 7).

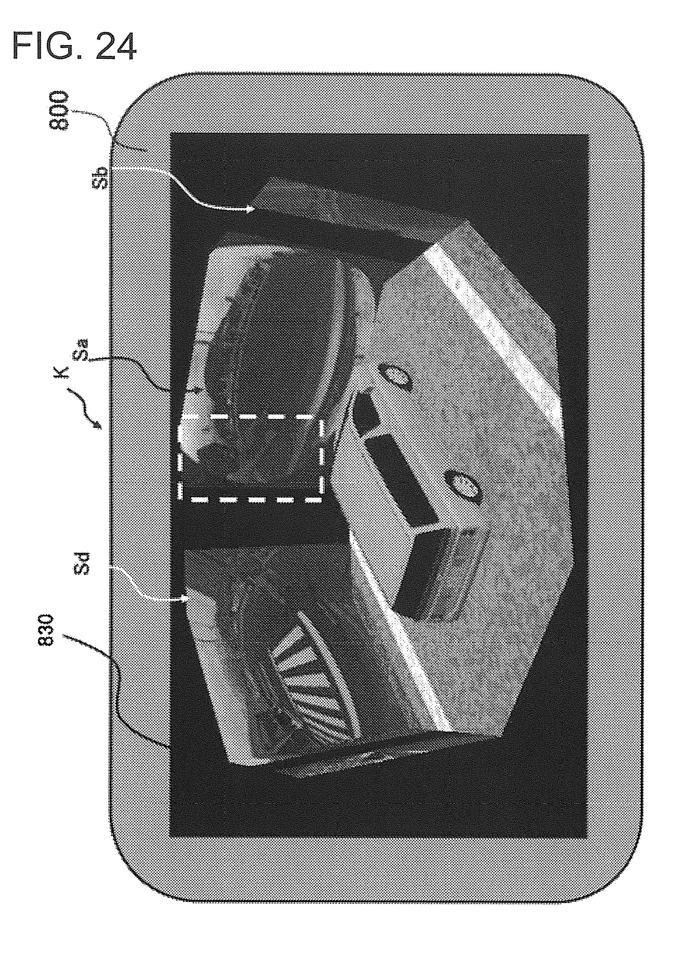

Thus, the image processing device 820 of the present embodiment forms a display image of a monitoring image K in which an image of the target object of monitoring is viewed from a head-on monitoring viewpoint. Specifically, Figure 24 shows a display image in which the terminal device 800 of the present embodiment has projected a monitoring image K in which an image of the detected target object of monitoring is viewed from a head-on monitoring viewpoint R8 onto the columnar-shaped projection model M having the surface upon which the vehicle V rests as a bottom surface based on the mapping information. In Figure 24, the image of the target object of monitoring is surrounded by a dotted line. The display image shown in the Figure contains an image of a projected onto head-on view projection surfaces Sa and Sb as viewed from viewpoint R8. In the display image shown in Figure 24, the image of the target object of monitoring is viewed head-on, and displayed in the center of the display 830. The display image shown in Figure 12 is an example of a case in which the image of the target object of monitoring is projected head-on, but, if the image of the target object of monitoring is to be displayed in the center of the display 830, the display image shown in Figure 24 is more suitable.

In this way, the terminal device 800 according to the present embodiment maps the monitoring image K, in which the captured images taken by each of the cameras 1 are disposed (horizontally) along the x axis direction or the y axis direction according to the order in which the cameras 1 are installed on the body of the vehicle V, along (horizontally) the sides of the columnar-shaped projection model M in the order in which the images are disposed, allowing the monitoring image K shown on the projection model M to present a picture of the surroundings of the vehicle V viewed panoramically clockwise.

In particular, showing an image of the vehicle V on the bottom surface of the projection model M, as shown in Figures 12-19, allows the orientation of the vehicle V and its positional relationship with the captured images to be easily determined. Specifically, the captured image GSP1 from the camera 1a provided on the front grille of the vehicle V can be projected on the projection surface S facing the front grille of the vehicle V, the captured image GSP4 from the camera 1d provided on the right side mirror of the vehicle V can be projected on the projection surface S facing the right side mirror of the vehicle V, the captured image GSP3 from the camera 1c provided on the rear of the vehicle V can be projected on the projection surface S facing the rear of the vehicle V, and the captured image GSP2 from the camera 1b provided on the left side mirror of the vehicle V can be projected on the projection surface S facing the left side mirror of the vehicle V. In accordance with the present embodiment, a monitoring image K can be shown in which the picture of the surroundings of the vehicle V is projected with its positional relationships intact, allowing a user to easily determine what is occurring around the vehicle, and where.

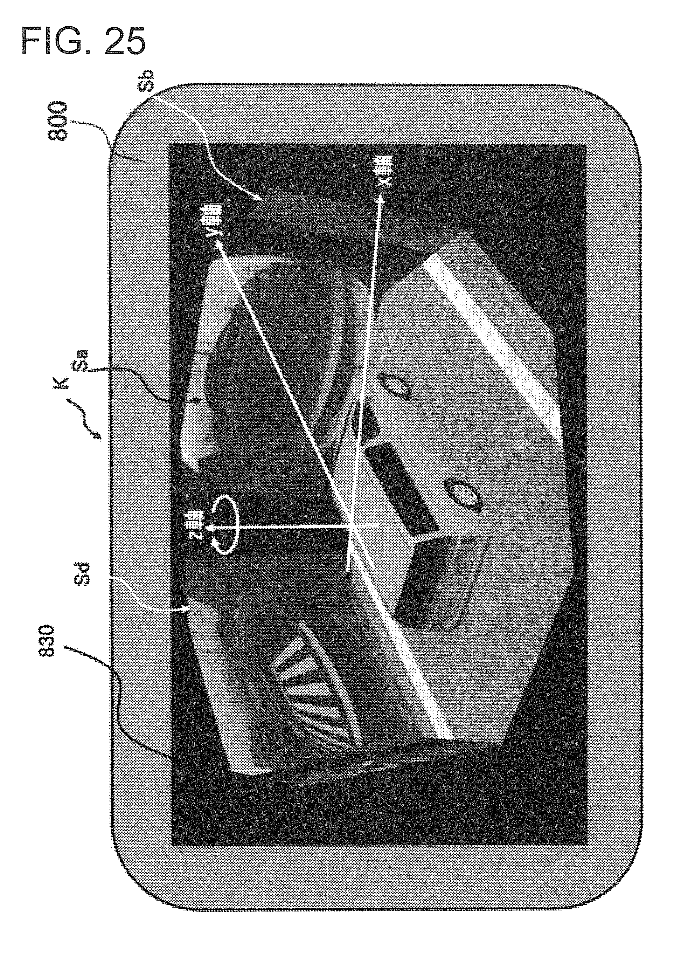

The image processing device 820 according to the present embodiment is further capable, after displaying the display image of the monitoring image K in which the image of the target object of monitoring is viewed from a head-on monitoring viewpoint, of moving the monitoring viewpoint across a predetermined range along the side of the projection model M to form display images viewed from various monitoring viewpoints. Specifically, after forming the display image shown in Figure 25, the image processing device 820 is capable of shifting the viewpoint clockwise around the z axis of the Figure from R8 in Figure 11 through R1, R2, R3, and R4-R7 to form display image of monitoring images K viewed from various viewpoints.

In this way, it is possible to change viewpoints and scan the surroundings of the vehicle after the head-on image of the target object of monitoring has been displayed, allowing the state of the vehicle V to be determined with accuracy.

Last, the display 830 of the terminal device 800 will be described. The display 830 according to the present embodiment displays the display image formed by the image processing device 820.

The display 830 according to the present embodiment is capable of accepting touch panel input information, allowing a user to freely set and alter the viewpoint. Because the correspondence between the viewpoint positions and the projection surfaces S is pre-defined in the image processing device 820 or the display 830 described above, a monitoring image K corresponding to an altered viewpoint can be shown on the display 830 based on this correspondence.

Because Figures 12-19, 24, and 25 are still images, they are incapable of showing the display image in a state of actual play, but the images shown on each of the projection surfaces S on the display screen of the display 830 are videos in the terminal device 800 of the present embodiment. In other words, a video of the captured area SP1 in front of the vehicle is projected on the projection surface S facing the front grille of the vehicle V, a video of the captured area SP4 to the right of the vehicle is projected on the projection surface S facing the right side mirror of the vehicle V, a video of the captured area SP3 to the rear of the vehicle is projected on the projection surface S facing the rear of the vehicle V, and a video of the captured area SP2 to the left of the vehicle is projected on the projection surface S facing the left side mirror of the vehicle V. In other words, a monitoring image K constituted by a plurality of videos based on captured images taken by different cameras 1 can be simultaneously played on the projection surfaces S shown in Figures 12-19, 24, and 25.

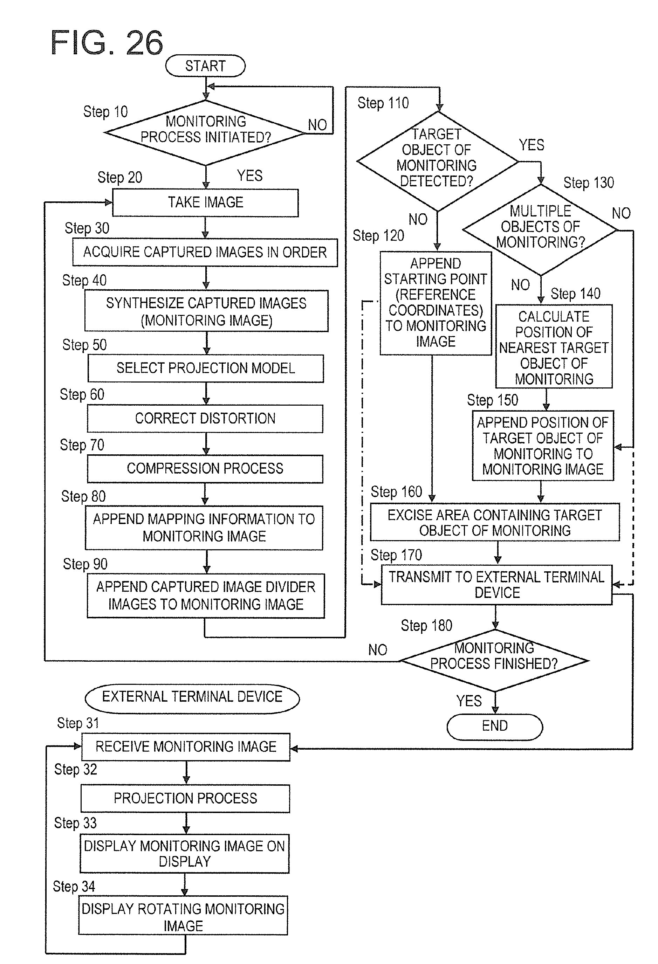

A process procedure of the vehicle monitoring system 1000 according to the present embodiment of the present invention will be described hereafter. Figure 26 is a flow chart showing a control process for the vehicle monitoring system 1000 according to the present embodiment.

The process comprising steps 10-90 shown in Figure 26 is the same as steps 10-90 for the first embodiment shown in Figure 20; thus, the description thereof is invoked by reference.

Next, the process continues to step 110, then to step 130 if the monitoring device 100 detects a target object of monitoring, and to step 120 if a target object of monitoring is not detected. In step 120, the control device 10 appends reference coordinates for a starting point or the like to the monitoring image K, and the process continues to step 160 or step 170.

Meanwhile, if a target object of monitoring is detected, it is determined in step 130 whether a plurality of objects of monitoring has been detected. If a plurality of objects of monitoring has been detected, the position of the target object of monitoring nearest the vehicle V is calculated in step 140, and the process continues to step 150. The process also continues to step 150 if a single target object of monitoring is detected in step 130. In step 150, the monitoring device 100 appends the position of the target object of monitoring nearest the vehicle V or the position of the single target object of monitoring to the monitoring image K. The process then proceeds to step 160.

In step 160, the monitoring device 100 excises only a captured image of a predetermined area centered on the image of the target object of monitoring. A monitoring image K can be formed using only this predetermined area centered on the image of the target object of monitoring (see Figure 23). It is also possible to continue to step 170 without performing this process.

In step 160, the monitoring device 100 transmits the monitoring image K with appended mapping information and the position of the target object of monitoring to the external terminal device 800.

Next, in step 170, the monitoring device 100 transmits the information containing the monitoring image K with associated mapping information obtained according to the process described above to the external terminal device 800. Then, in step 180, the process from step 20 onward is repeated until it is determined that the monitoring process has ended.

In step 31, the communication device 810 of the external terminal device 800, receives the monitoring image K sent from the monitoring device 100 along with the mapping information and position of the target object of monitoring.

Next, in step 32, the image processing device 820 projects the monitoring image K onto the projection surfaces S of the projection model M according to the mapping information. A picture of the vehicle V can be appended to the bottom surface of the projection model M in advance.

The image processing device 820 is capable of forming, based on the mapping information, a display image in which a monitoring image K in which an image of the detected target object of monitoring is viewed from a head-on monitoring viewpoint R is projected onto the projection surface S established by the side surface of the columnar-shaped projection model M having the surface upon which the vehicle V rests as a bottom surface. The image processing device 820 is further capable of moving the monitoring viewpoint R across a predetermined range (R1-R8) along the side of the projection model M to form display images viewed from various monitoring viewpoints R.

In step 33, the display 830 displays a display image of the monitoring image K, projected onto the projection model M, in which the image of the target object of monitoring is viewed from a head-on monitoring viewpoint, then moves the monitoring viewpoint R to display the display images of the monitoring image K viewed from various monitoring viewpoints R.

In the present embodiment, an example in which the monitoring device 100 is disposed in the vehicle V has been described, but the method for monitoring the vehicle V according to the present embodiment of the present invention can be executed by various devices. In addition, part or all of the process of the method for monitoring the vehicle V according to the present embodiment of the present invention can be executed by a server (computer, control device) capable of exchanging information with a client (computer, control device) capable of controlling the cameras 1 and communication device 400. The server can be disposed at a remote location from the client.

The server can execute the following command to execute the vehicle monitoring method according to the present embodiment of the present invention. The command includes: a step of acquiring captured images from each of the plurality of cameras 1, installed at different positions on the body of the vehicle V, for capturing the surroundings of the vehicle V, as well as the position of a target object of monitoring detected in the surroundings of the vehicle V; a step of forming a single monitoring image K disposed according to the order in which the cameras 1 are installed in the clockwise or counterclockwise direction around the circumference of the body of the vehicle V based on the captured images taken by the cameras 1, information on the position of the target object of monitoring being appended thereto; a step of appending mapping information for projecting the formed monitoring image K onto the projection surfaces S established by the side of the columnar-shaped projection model M having the surface upon which the vehicle V rests as a bottom surface to the monitoring image K; and a step of transmitting the monitoring image K in which the position of the target object of monitoring and the mapping information are associated to the external terminal device 800. The specific content of the process is shared with the monitoring device 100 and the vehicle monitoring system 1000 according to the present embodiment; thus, the corresponding descriptions are invoked by reference.

The server executing the monitoring method performs a projection process for the monitoring image K, and forms an image for display in which the monitoring image K is projected onto the projection model M.

In this case, the server can execute the following command to execute the vehicle monitoring method according to the present embodiment of the present invention. The command includes: a step of acquiring captured images from each of the plurality of cameras 1, installed at different positions on the body of the vehicle V, for capturing the surroundings of the vehicle V, as well as the position of a target object of monitoring detected in the surroundings of the vehicle V; a step of forming a single monitoring image K in which the captured images taken by the cameras 1 installed in the clockwise or counterclockwise direction around the circumference of the body of the vehicle V are disposed according to the order in which the cameras 1 are installed, information on the position of the target object of monitoring being appended thereto; a step of appending mapping information for projecting a monitoring image K in which an image of the detected target object of monitoring is viewed from a head-on monitoring viewpoint onto projection surfaces S established by the side of the columnar-shaped projection model M having the surface upon which the vehicle V rests as a bottom surface to the monitoring image K; and a step of forming a display image in which the monitoring image K in which the image of the target object of monitoring is viewed from a head-on monitoring viewpoint is projected onto the columnar-shaped projection model M having the surface upon which the vehicle V rests as a bottom surface based on the mapping information. The server browsably stores the formed display image, and is capable of permitting browsing of the display image when accessed by the terminal device 800, allowing the display image to be displayed on the display 830 of the terminal device 800. The server may also, in response to a request from the terminal device 800, permit downloading of the display image, or transmit the display image to the terminal device 800 and display the image on the display 830 of the terminal device 800. The specific content of the process is shared with the monitoring device 100 and the vehicle monitoring system 1000 according to the present embodiment; thus, the corresponding descriptions are invoked by reference.

It is also possible to have the terminal device 800 perform the following command, control the operation of the terminal device 800, and execute the vehicle monitoring method according to the present embodiment of the present invention. The command includes: a step of receiving, via a communication line, a single monitoring image K in which captured images taken by a plurality of cameras 1 installed at different positions on the body of the vehicle V are continuously disposed according to the order in which the cameras 1 are installed in the left or right direction around the circumference of the body of the vehicle V, information on the position of a target object of monitoring being appended thereto, and mapping information for projecting the monitoring image K onto projection surfaces S established by the side of a columnar-shaped projection model M having the surface upon which the vehicle V rests as a bottom surface; a step of forming a display image in which the acquired monitoring image K is projected onto the projection surfaces S established by the side of the columnar-shaped projection model M having the surface upon which the vehicle V rests as a bottom surface based on the acquired mapping information as a monitoring image K in which an image of the target object of monitoring is viewed from a head-on monitoring viewpoint; and a step of displaying the display image on the display 830. The specific content of the process is shared with the terminal device 800 according to the present embodiment; thus, the corresponding descriptions are invoked by reference.

The monitoring device 100, vehicle monitoring system 1000, and terminal device 800 according to the present embodiment of the present invention, which are constituted and operate as described above, yield the following effects.

The monitoring device 100 according to the present embodiment transmits the monitoring image K in which the captured images taken by the plurality of cameras 1 is disposed according to the order in which the cameras 1 are installed, the position of a target object of monitoring detected in the surroundings of the vehicle V being appended thereto, and mapping information for projecting the monitoring image K onto the projection surfaces S established by the side of the columnar-shaped projection model M to the external terminal device 800. As a result, the external terminal device 800 receiving the sent monitoring image K is capable of projecting a continuous single monitoring image K in which the plurality of captured images are disposed according to the order in which the cameras are installed on the projection surfaces S established by the side of the prism based on the mapping information, and of projecting an image of the target object of monitoring at a desired position based on the information on the position of the target object of monitoring appended to the monitoring image, allowing a monitoring image to be displayed in which the target object of monitoring to which attention should be direction can easily be determined. As a result, it is possible to draw a user's attention to the image of the target object of monitoring, allowing the time needed to confirm the target object of monitoring to be reduced, and the convenience of the remote monitoring of the vehicle to be increased. In particular, if mapping information for projecting the monitoring image K with which the information on the position of the detected target object of monitoring is associated onto the projection surfaces S from a viewpoint such that an image of the target object of monitoring is viewed head-on is appended to the monitoring image K, the terminal device 800 can project a monitoring image K having a monitoring viewpoint in which an image of the target object of monitoring is viewed head-on onto the projection surfaces S. It is thus possible, in accordance with the present embodiment, to display a monitoring image K in which that captured image, out of the plurality of captured images, to which attention should be directed can easily be determined. As a result, it is possible to draw a user's attention to the image of the target object of monitoring, allowing the time needed to confirm the target object of monitoring to be reduced, and the convenience of the remote monitoring of the vehicle to be increased.

If a plurality of objects of monitoring are detected in the surroundings of the vehicle V, the monitoring device 100 according to the present embodiment position of the target object of monitoring nearest the vehicle V is appended to the monitoring image K, allowing the user's attention to be drawn to that target object of monitoring, out of the plurality of objects of monitoring, most requiring attention. As a result, the time needed to confirm the target object of monitoring can be reduced, and the convenience of the remote monitoring of the vehicle can be increased.

The monitoring device 100 according to the present embodiment forms a monitoring image K in which only a captured image of a predetermined area centered on an image of a detected target object of monitoring; thus, only a captured image containing an image of the target object of monitoring to which a user's attention should be drawn is transmitted to the terminal device 800, allowing the amount of transmitted data to be reduced. As a result, the communication load of the monitoring system when in operation can be reduced.

The monitoring device 100 according to the present embodiment forms the monitoring image K after correcting distortion arising when the captured images are projected onto the projection surfaces S established by the side of the projection model M, allowing an easy-to-view monitoring image K with little distortion to be provided. Pre-correcting distortion also allows positional deviation of the horizontally-disposed captured images to be reduced.

The monitoring device 100 according to the present embodiment appends mapping information for projecting a monitoring image K in which an image of a detected target object of monitoring is viewed from a head-on monitoring viewpoint onto the projection surfaces S of the projection model M to the monitoring image K; thus, the terminal device 800 can display a monitoring image K of the target object of monitoring viewed head-on based on the mapping information, allowing the processing load of the terminal device 800 to be reduced.

Operation and effects similar to those yielded by the monitoring device 100, monitoring system 1000, and terminal device 800 when the method for monitoring the vehicle V according to the present embodiment is used.

All the embodiments described above are for aiding understanding of the present invention, and do not limit the present invention. Thus, the various elements disclosed in the abovementioned embodiments encompass all design modifications and equivalents falling within the technical scope of the present invention.

In the present specification, the monitoring device 100 and vehicle monitoring system 1000 are described as an example of one aspect of the vehicle monitoring device according to the present invention, but such a configuration is not provided by way of limitation to the present invention.

Additionally, in the specification, the monitoring device 100 provided with the control device 10 comprising the CPU 11, ROM 12, and RAM 13 is described as an example of one aspect of the vehicle monitoring device according to the present invention, but such a configuration is not provided by way of limitation to the present invention.

In the present specification, the monitoring device 100 provided with the cameras 1 and the control device 10 for performing the monitoring object-detecting function, monitoring image-forming function, mapping information-assigning function, and transmission function is described as an example of one aspect of the vehicle monitoring device according to the present invention, which comprises cameras, monitoring-object-detecting means, monitoring-image-forming means, mapping-information-appending means, and transmission means, but such a configuration is not provided by way oflimitation to the present invention.

In the present specification, the terminal device 800 provided with the communication device 810, the image processing device 820, and the display 830 is described as one aspect of a terminal device provided with communication means, image processing means, and display means, but such a configuration is not provided by way of limitation to the present invention.

In the present specification, the vehicle monitoring system 1000 provided with the monitoring device 100, the vehicle controller 200, the communication device 400, and the external terminal device 800 of the invention according to the present application is described as an example of one aspect of the vehicle monitoring system according to the present invention, but the present invention is not limited to such a configuration.

### [Key to Symbols]

- 1000:: Vehicle monitoring system
- 1a-1d:: Camera
- 2a-2d:: Proximity sensor
- 3:: Anomaly detection sensor
- 100:: Monitoring device
- V:: Vehicle
- 10:: Control device
- 11:: CPU
- 12:: ROM
- 13:: RAM
- M:: Projection model
- S, Sa, Sb, Sc, Sd:: Projection surface
- R1-R8:: Viewpoint
- 200:: Vehicle controller
- 300:: Ignition switch
- 400:: Communication device
- 800:: Terminal device
- 810:: Communication device
- 820:: Image processor
- 830:: Display
- 900:: Communication line

## Claims

1. A vehicle monitoring device comprising:
a plurality of cameras installed at different positions on a body of a vehicle, the cameras adapted for capturing surroundings of the vehicle;
monitoring-image-forming means for acquiring captured images from each of the cameras, and forming a single monitoring image in which the captured images from the cameras installed in a left or right direction around a circumference of the body of the vehicle are disposed according to an order in which an cameras are installed;
mapping-information-appending means for associating, with the monitoring image, mapping information for projecting the monitoring image onto a projection surface established by a side surface of a columnar-shaped projection model having a surface upon which the vehicle rests as a bottom surface; and
transmission means for transmitting the monitoring image and the mapping information to an external terminal device.

2. The vehicle monitoring device according to claim 1, **characterized in that**:
the mapping-information-appending means appends to the monitoring image reference coordinates, as mapping information, for the captured images at a right or left edge of the monitoring image.

3. The vehicle monitoring device according to claim 1, **characterized in** being further provided with:
monitoring-object-detecting means for detecting a position of a target object of monitoring in the surroundings of the vehicle;
the monitoring-image-forming means acquiring captured images from each of the cameras, and forming a single monitoring image in which the captured images from the cameras installed in the left or right direction around a circumference of the body of the vehicle are disposed according to an order in which the cameras are installed, the image being associated with information on the position of the detected target object of monitoring;
the mapping-information-appending means associating, with the monitoring image, mapping information for projecting the monitoring image onto a projection surface established by a side surface of a columnar-shaped projection model having a surface upon which the vehicle rests as a bottom surface; and
the transmission means transmitting to the external terminal device the monitoring image in which the position of the target object of monitoring and the mapping information are associated.

4. The vehicle monitoring device according to claim 3, **characterized in that**:
the mapping-information-appending means appends, to the monitoring image, mapping information for projecting the monitoring image, in which an image of the detected target object of monitoring is viewed from a head-on monitoring viewpoint, onto the projection surface established by the side surface of the columnar-shaped projection model having the surface upon which the vehicle rests as a bottom surface.

5. The vehicle monitoring device according to claim 3 or 4, **characterized in that**:
when the monitoring-object-detecting means detects a plurality of objects of monitoring in the surroundings of the vehicle, the monitoring-image-forming means associates the position of the target object of monitoring nearest the vehicle to the monitoring image.

6. The vehicle monitoring device according to any one of claims 3-5, **characterized in that**:
when the monitoring-object-detecting means detects the target object of monitoring, the monitoring-image-forming means forms a monitoring image in which only a captured image of a predetermined area centered on an image of the target object of monitoring is disposed.

7. The vehicle monitoring device according to any one of claims 1-6, **characterized in that**:
the monitoring-image-forming means stores, over time, a monitoring image formed from the captured images taken substantially simultaneously by the cameras, and forms a monitoring image constituting a video containing the plurality of monitoring images for a predetermined period of time.

8. The vehicle monitoring device according to any one of claims 1-7, **characterized in that**:
the monitoring-image-forming means compresses the image data so that a pixel count of the monitoring image is substantially identical to a pixel counts of the captured images taken by the cameras to form the monitoring image.

9. The vehicle monitoring device according to any one of claims 1-8, **characterized in that**:
the monitoring-image-forming means appends linear graphics indicating boundaries of the disposed captured images to the monitoring image.

10. The vehicle monitoring device according to any one of claims 1-9, **characterized in that**:
the monitoring-image-forming means forms the monitoring image after correcting distortion arising when the captured images are projected onto the projection surface established by the side surface of the projection model.

11. A vehicle monitoring system comprising:
the vehicle monitoring device according to any one of claims 1-10; and
a terminal device capable of exchanging information with the vehicle monitoring device;
the external terminal device comprising:
communication means for communicating with the vehicle monitoring device and acquiring the monitoring image and the mapping information;
image processing means for forming a display image in which the monitoring image is projected onto the projection surface established by the side surface of the columnar-shaped projection model having the surface upon which the vehicle rests as a bottom surface based on the mapping information; and
display means for displaying the formed display image.

12. A vehicle monitoring system comprising:
the vehicle monitoring device according to claim 3, or any one of claims 4-10, which are dependent upon claim 3; and
a terminal device capable of exchanging information with the vehicle monitoring device;
the external terminal device comprising:
communication means for communicating with the vehicle monitoring device and acquiring the monitoring image to which information on the position of the target object of monitoring is appended and the mapping information;
image processing means for forming a display image in which the monitoring image, in which an image of the detected target object of monitoring is viewed from a head-on monitoring viewpoint, is projected onto the projection surface established by the side surface of the columnar-shaped projection model having the surface upon which the vehicle rests as the bottom surface based on the mapping information; and
display means for displaying the formed display image.

13. A terminal device for monitoring a vehicle, the device comprising:
communication means for acquiring a monitoring image in which captured images taken by a plurality of cameras installed at different positions on a body of a vehicle are disposed according to an order in which the cameras are installed in a clockwise or counterclockwise direction around a circumference of the body of the vehicle, and mapping information for projecting onto a projection surface established by a side surface of a columnar-shaped projection model having a surface upon which the vehicle rests as a bottom surface;
image processing means for forming a display image in which the acquired monitoring image is projected onto the projection surface established by the side surface of the columnar-shaped projection model having the surface upon which the vehicle rests as a bottom surface based on the mapping information; and
display means for displaying the formed display image.

14. A terminal device for monitoring a vehicle, the device comprising:
communication means for acquiring a monitoring image in which captured images taken by a plurality of cameras installed at different positions on a body of a vehicle are disposed according to an order in which the cameras are installed in a clockwise or counterclockwise direction around a circumference of the body of the vehicle, information on a position of a target object of monitoring detected on a vehicle side being appended thereto, and mapping information for projecting onto a projection surface established by a side surface of a columnar-shaped projection model having a surface upon which the vehicle rests as a bottom surface;
image processing means for forming a display image in which the monitoring image, in which an image of the detected target object of monitoring is viewed from a head-on monitoring viewpoint, is projected onto the projection surface established by the side surface of the columnar-shaped projection model having the surface upon which the vehicle rests as the bottom surface based on the mapping information; and
display means for displaying the formed display image.

15. The terminal device for monitoring a vehicle according to claim 14, **characterized in that**:
the image processing means moves the monitoring viewpoint across a predetermined range along the side surface of the projection model, so that display images form the monitoring viewpoints are formed; and
the display means displays the formed display images in order.

16. A vehicle monitoring method comprising the steps of:
acquiring captured images taken by a plurality of cameras installed at different positions on a body of a vehicle, the cameras adapted for capturing surroundings of the vehicle;
forming a single monitoring image in which the captured images are disposed according to an order in which the cameras are installed based on the captured images taken by the cameras installed in a clockwise or counterclockwise direction around a circumference of the body of the vehicle;
appending, onto the formed monitoring image, mapping information for projecting the monitoring image onto a projection surface established by a side surface of a columnar-shaped projection model having a surface upon which the vehicle rests as a bottom surface; and
transmitting the monitoring image and the mapping information associated with the monitoring image to an external terminal device.

17. A vehicle monitoring method comprising the steps of:
acquiring captured images taken by a plurality of cameras, installed at different positions on a vehicle, the cameras adapted for capturing surroundings of the vehicle, and a position ofa target object of monitoring detected in the surroundings of the vehicle;
forming a single monitoring image in which the captured images from the cameras installed in the left or right direction around a circumference of the body of the vehicle are disposed according to an order in which the cameras are installed, information on the position of the detected target object of monitoring being appended to the image;
appending, onto the formed monitoring image, mapping information for projecting the monitoring image onto a projection surface established by a side surface of a columnar-shaped projection model having a surface upon which the vehicle rests as a bottom surface; and
transmitting the monitoring image in which the position of the target object of monitoring and the mapping information are associated to an external terminal device.

18. A vehicle monitoring method comprising the steps of:
acquiring captured images taken by a plurality of cameras installed at different positions on a body of a vehicle, the cameras adapted for capturing surroundings of the vehicle;
forming a single monitoring image based on the captured images which are disposed according to an order in which the cameras are installed in a clockwise or counterclockwise direction around a circumference of the body of the vehicle;
appending, onto the formed monitoring image, mapping information for projecting the monitoring image onto a projection surface established by a side surface of a columnar-shaped projection model having a surface upon which the vehicle rests as a bottom surface; and
forming, based on the mapping information, a display image in which the monitoring image is projected onto the projection surface established by the side surface of the columnar-shaped projection model having the surface upon which the vehicle rests as a bottom surface.

19. A vehicle monitoring method comprising the steps of:
acquiring captured images taken by a plurality of cameras installed at different positions on a vehicle, the cameras adapted for capturing surroundings of the vehicle, and a position of a target object of monitoring detected in the surroundings of the vehicle;
forming a single monitoring image in which the captured images from the cameras installed in the left or right direction around a circumference of the body of the vehicle are disposed according to an order in which the cameras are installed, information on the position of the detected target object of monitoring being appended to the image;
appending mapping information onto the monitoring image, in which an image of the detected target object of monitoring is viewed from a head-on monitoring viewpoint, for projecting the monitoring image onto a projection surface established by a side surface ofa columnar-shaped projection model having a surface upon which the vehicle rests as a bottom surface; and
forming, based on the mapping information, a display image in which the monitoring image, in which the image of the target object of monitoring is viewed from a head-on monitoring viewpoint, is projected onto the columnar-shaped projection model having the surface upon which the vehicle rests as a bottom surface.

20. A vehicle monitoring method comprising the steps of:
receiving, via a communication line, a monitoring image in which captured images taken by a plurality of cameras installed at different positions on a body of a vehicle are continuously disposed according to an order in which the cameras are installed in a clockwise or counterclockwise direction around a circumference of the body of the vehicle, and mapping information for projecting the monitoring image onto a projection surface established by a side surface of a columnar-shaped projection model having a surface upon which the vehicle rests as a bottom surface;
forming, based on the received mapping information, a display image in which the received monitoring image is projected onto the projection surface established by the side surface of the columnar-shaped projection model having the surface upon which the vehicle rests as a bottom surface; and
displaying the formed display image on a display.

21. A vehicle monitoring method comprising the steps of:
receiving, via a communication line, a single monitoring image in which captured images taken by a plurality of cameras installed at different positions on a body of a vehicle are continuously disposed according to an order in which the cameras are installed in clockwise or counterclockwise direction around a circumference of the body of the vehicle, information on a position of a detected target object of monitoring being appended to the single monitoring image, and mapping information for projecting the monitoring image onto a projection surface established by a side surface of a columnar-shaped projection model having a surface upon which the vehicle rests as a bottom surface;
forming, based on the acquired mapping information, a display image in which the acquired monitoring image, in which an image of the target object of monitoring is viewed from a head-on monitoring viewpoint, is projected onto the columnar-shaped projection model having the surface upon which the vehicle rests as a bottom surface; and
displaying the formed display image on a display.
